# EUROPÄISCHE PATENTSCHRIFT

(11) **EP 4 706 884 B1**
(45) Veröffentlichungstag und Bekanntmachung des Hinweises auf die Patenterteilung: **28.10.2026**
(21) Anmeldenummer: 25213769.0
(22) Anmeldetag: 15.05.2024
(51) Int. Cl.: B23Q 39/04, B23Q 7/04, B23Q 39/00

(54) **BEARBEITUNGSZENTRUM ZUR MECHANISCHEN BEARBEITUNG VON WERKSTÜCKEN**
MACHINING CENTRE FOR THE MECHANICAL MACHINING OF WORKPIECES
CENTRE D'USINAGE POUR L'USINAGE MÉCANIQUE DE PIÈCES

(43) Veröffentlichungstag der Anmeldung: 11.03.2026
(62) Dokumentnummer(n) der früheren Anmeldung(en) nach Art. 76 EPÜ: 24175996.8 / 4 650 098
(73) Patentinhaber: MG Beteiligungsgesellschaft mbH, 73312 Geislingen/Steige (DE)
(72) Erfinder: Grüner, Magnus, 73312 Geislingen/Steige (DE); Grüner, Tobias, 73312 Geislingen/Steige (DE)
(74) Vertreter: Patentanwälte Magenbauer & Kollegen Partnerschaft mbB

(56) Entgegenhaltungen:
- EP-A1- 1 593 457
- DE-A1- 102011 111 677
- DE-A1- 102019 120 681

## Beschreibung

Die Erfindung betrifft ein Bearbeitungszentrum zur mechanischen Bearbeitung von Werkstücken, mit einer ersten Bearbeitungseinheit, die einen in einer Z-Achsrichtung eines durch drei senkrecht aufeinander stehende Achsrichtungen X, Y, Z gebildeten Koordinatensystems bewegbaren, mit einem Bearbeitungswerkzeug zur Bearbeitung eines in einer Bearbeitungszone angeordneten Werkstücks bestückbaren ersten Werkzeugschlitten und eine in einer X-Achsrichtung und in einer Y-Achsrichtung bewegbare, mit einer Spannvorrichtung zur Aufnahme und zum Festspannen des zu bearbeitenden Werkstücks bestückbare erste Werkstückpositioniereinheit aufweist, wobei der erste Werkzeugschlitten eine zu einer Rotationsbewegung antreibbare Antriebsspindel zur Breitstellung von Antriebsenergie für das Bearbeitungswerkzeug aufweist, und wobei die Spannvorrichtung um eine erste Rotationsachse rotierbar ist, mit einer unabhängig von der ersten Bearbeitungseinheit betreibbaren zweiten Bearbeitungseinheit, die in X-Achsrichtung benachbart zu der ersten Bearbeitungseinheit angeordnet ist und einen unabhängig von dem ersten Werkzeugschlitten in Z-Achsrichtung bewegbaren zweiten Werkzeugschlitten sowie eine unabhängig von der ersten Werkstückpositioniereinheit in X-Achsrichtung und Y-Achsrichtung bewegbare zweite Werkstückpositioniereinheit aufweist, mit einem Werkzeugwechsler, mit dem ein Werkzeugwechsel an dem ersten Werkzeugschlitten und dem zweiten Werkzeugschlitten durchführbar ist, wenn diese sich in der Werkzeugwechselposition befinden, wobei der Werkzeugwechsler mittels einer Drehantriebsvorrichtung um eine Wechsler-Drehachse drehbar zwischen Werkzeugmagazin und Werkzeugschlitten zur Übergabe oder Aufnahme von Bearbeitungswerkzeugen gelagert ist.

Derartige Bearbeitungszentren sind bereits seit Langem bekannt. Solche Bearbeitungszentren werden zur mechanischen, insbesondere spanabhebenden Bearbeitung von Werkstücken eingesetzt. Derartige mehrachsige NC-fähige Werkzeugmaschinen eignen sich für die Komplettbearbeitung von Werkstücken, wobei hier in der Regel Funktionen einer Drehmaschine, einer Fräsmaschine und einer Bohrmaschine mit umfasst sind.

Ein Bearbeitungszentrum der eingangs erwähnten Art ist beispielsweise aus der EP 0 767 721 B1 bekannt. Das dort offenbarte Bearbeitungszentrum besitzt eine in Z-Achsrichtung bewegbare Arbeitseinheit, die mit einem Bearbeitungswerkzeug, beispielsweise in Form eines Bohrers bestückbar ist. Mit dem Bearbeitungswerkzeug lässt sich ein in einer Bearbeitungszone angeordnetes Werkstück bearbeiten, das mit Hilfe einer Positioniereinrichtung in der Bearbeitungszone relativ zum Bearbeitungswerkzeug positionierbar ist. Dabei wird das Werkstück mittels einer Spannvorrichtung gehalten. Die Positioniereinrichtung wiederum ist in X-Achsrichtung verfahrbar und weist zudem eine Y-Achse und eine Rotationsachse auf. Die Positioniereinrichtung ist dazu eingerichtet, das angekoppelte Werkstück zwischen der Bearbeitungszone und einer außerhalb der Bearbeitungszone befindlichen Werkstück-Wechselstation zu verfahren, wo ein Werkstückwechsel zwischen zu bearbeitenden und bereits bearbeiteten Werkstücken, beispielsweise mit Hilfe eines Greifers stattfindet.

Die DE 10 2011 111 677 A1 offenbart eine Bearbeitungsvorrichtung für Werkstücke, die Werkstückpositioniereinheiten in Form von Einspann- und Antriebseinheiten aufweist, die unabhängig voneinander jeweils in X-Z-Richtung bewegbar sind, wobei zu bearbeitende Werkstücke an den Einspann- und Antriebseinheiten über dort angeordnete Spannfutter lösbar festgespannt werden können. Die Bearbeitungsvorrichtung besitzt ferner zwei jeweils einer der Einspann- und Antriebsvorrichtungen bzw. Spindeleinheiten zugeordnete Werkzeugrevolver.

Die DE 10 2019 120 681 A1 offenbart eine Werkzeugmaschine, die zwei Werkzeugspindeln aufweist, denen jeweils ein Werkzeugschlitten bzw. eine Werkzeugspindel zugeordnet ist. Es können für jede Werkzeugspindel und für jeden Träger Antriebsordnungen vorgesehen sein, wobei die beiden Werkzeugspindeln unabhängig voneinander jeweils durch einen zugeordneten Antrieb in Z-Richtung bewegbar sind und die beiden Werkstückträger unabhängig voneinander in X-Richtung durch zugeordnete X-Antriebe verfahrbar sind. Es ist ferner eine Werkzeugwechseleinheit vorgesehen, die mit einem Doppelgreifer ausgestattet sein kann, der um eine in Z-Richtung ausgerichtete Schwenkachse schwenkbar zwischen einem Magazin und einem zugeordneten Werkzeugschlitten gelagert ist.

Aufgabe der Erfindung ist es, ein Bearbeitungszentrum der eingangs erwähnten Art zu schaffen, mit dem im Vergleich zur herkömmlichen Bearbeitungszentren kürzere Taktzeiten gefahren werden können, so dass die Ausbringung der Werkstücke und insgesamt die Produktivität des Bearbeitungszentrums gesteigert werden kann. Ferner soll im Vergleich zu herkömmlichen Bearbeitungszentren eine größere Energieeffizienz erreicht werden.

Diese Aufgabe wird durch ein Bearbeitungszentrum mit den Merkmalen des unabhängigen Anspruchs 1 gelöst. Weiterbildungen der Erfindung sind in den Unteransprüchen dargestellt.

Das erfindungsgemäße Bearbeitungszentrum zeichnet sich dadurch aus, dass der Werkzeugwechsler einen Grundkörper mit einer Außenfläche aufweist, an der wenigstens zwei Paare von Wechselarmen angeordnet sind, derart, dass die durch die beiden Wechselarme eines Paares von Wechselarmen jeweils aufgespannten Ebenen im Winkel, insbesondere senkrecht, zueinander stehen, wobei vorzugsweise ein Wechselarm-Paar sich an dem zugeordneten Werkzeugmagazin und ein Wechselarm-Paar an den Werkzeugschlitten befindet.

Es ist möglich, gleichzeitig zwei Werkstücke im Bearbeitungszentrum zu bearbeiten. Die Bearbeitungsvariabilität ist dabei enorm, so ist es beispielsweise möglich, mit einem der Bearbeitungseinheiten ein Werkstück eines ersten Typs und gleichzeitig mit der anderen Bearbeitungseinheit ein Werkstück eines zweiten Typs zu bearbeiten. Ferner ist es oft notwendig, die Werkzeuge jeweils mittels verschiedener Aufspannungen zu bearbeiten, wobei beispielsweise eine erste Aufspannung des Werkstücks dazu verwendet wird, dieses an Bereichen des Umfangs zu bearbeiten, während eine andere Aufspannung dazu vorgesehen ist, das Werkstück stirnseitig zu bearbeiten. Es ist hier also möglich, gleichzeitig mit der einen Bearbeitungseinheit ein Werkstück in der ersten Aufspannung und mit der anderen Bearbeitungseinheit ein Werkstück des gleichen Typs in der zweiten Aufspannung zu bearbeiten.

Insgesamt erhöht sich durch die parallele Bearbeitung von zwei Werkstücken die Produktivität des Bearbeitungszentrums gegenüber herkömmlichen Bearbeitungszentren.

Bei einer Weiterbildung der Erfindung ist den Bearbeitungseinheiten für die unabhängig voneinander durchführbaren Bewegungen in X-Achsrichtung eine gemeinsame Führungseinrichtung zugeordnet. Zweckmäßigerweise sind Komponenten der Führungseinrichtung beiden Bearbeitungseinheiten zugeordnet, während andere Komponenten nur jeweils einer bestimmten der Bearbeitungseinheiten zugeordnet sind.

Zweckmäßigerweise erstreckt sich die Führungseinrichtung entlang der X-Achsrichtung oberhalb des ersten und zweiten Werkzeugschlittens.

In besonders bevorzugter Weise weist die Führungseinrichtung wenigstens eine sich in X-Achsrichtung erstreckende Führungsschiene auf, auf der die erste und zweite Werkstückpositioniereinheit unabhängig voneinander mittels den Werkstückpositioniereinheiten jeweils zugeordneten X-Achs-Antrieben hin- und herbewegbar sind. Infolge des nicht unerheblichen Gewichts der Werkstückpositioniereinheiten beziehungsweise den Erfordernissen der exakten Positionierung sind mehrere Führungsschienen zur Führung der Werkstückpositioniereinheiten vorgesehen, beispielsweise zwei oder drei an der Zahl.

Zweckmäßigerweise sind die X-Achs-Antriebe als Linearantriebe ausgebildet, beispielsweise in Form von Linearmotoren ausgestaltet. Auch hier ist es zweckmäßig, Komponenten der Linearantriebe beiden Bearbeitungseinheiten, also beiden Werkstückpositioniereinheiten zuzuordnen, beispielsweise in Form von sich entlang der Führungsschienen in X-Achsrichtung erstreckenden Permanentmagnetsegmenten. Zweckmäßigerweise befindet sich dann der Läufer des Linearmotors an den bewegbaren Werkstückpositioniereinheiten.

Es ist möglich, dass die Führungseinrichtung zwei X-Achs-Antriebe in Form von Linearmotoren aufweist, von denen jeweils ein Linearmotor der ersten Werkstückpositioniereinheit und der andere Linearmotor der zweiten Werkstückpositioniereinheit zugeordnet ist. Besonders bevorzugt ist jedoch, dass die Führungseinrichtung insgesamt vier X-Achs-Antriebe aufweist, insbesondere ausgestaltet als Linearmotoren, von denen zwei Linearmotoren der ersten Werkstückpositioniereinheit und die beiden weiteren Linearmotoren der zweiten Werkstückpositioniereinheit zugeordnet sind. Die Auswahl der Anzahl der Linearmotoren hängt maßgeblich von der abrufbaren Leistung der Linearmotoren ab, so dass zweckmäßigerweise bei besonders schweren Werkstückpositioniereinrichtungen zwei Linearmotoren pro Werkstückpositioniereinheit zum Einsatz kommen.

Bei einer Weiterbildung der Erfindung weisen die Werkstückpositioniereinheiten jeweils einen in X-Achsrichtung verfahrbar an der wenigstens einen Führungsschiene der Führungseinrichtung gelagerten Kreuzschlitten und einen in Y-Achsrichtung verfahrbaren Kreuzschlitten gelagerten Y-Schlitten auf. Zweckmäßigerweise ist der Kreuzschlitten an zwei oder drei Führungsschienen der Führungseinrichtung gelagert.

In besonders bevorzugter Weise besitzt der jeweilige Kreuzschlitten einen Y-Achs-Antrieb zum Antreiben des zugeordneten Y-Schlittens in der Y-Achsrichtung. Zweckmäßigerweise ist der Y-Achs-Antrieb als Linearantrieb, insbesondere Y-Spindelantrieb ausgebildet. Es können jedoch auch andere Arten von Linearantrieben als Spindelantriebe zum Einsatz kommen.

Bei einer Weiterbildung der Erfindung weisen die Werkstückpositioniereinheiten jeweils einen insbesondere an Bord des jeweils Y-Schlittens angeordneten Rotationsantrieb zur Einleitung einer Rotationsbewegung auf die angekoppelte Spannvorrichtung und die erste Rotationsachse auf. Dies ermöglicht, dass das Werkstück in X-Achsrichtung, in Y-Achsrichtung positioniert und zusätzlich noch um wenigstens eine Rotationsachse rotiert werden kann. Die Zustellung des Bearbeitungswerkzeugs an das zu bearbeitende Werkstück mit Hilfe des Werkzeugschlittens erfolgt dann in Z-Achsrichtung. Zweckmäßigerweise verläuft die erste Rotationsachse in Y-Achsrichtung.

Wie die Werkstückpositioniereinheiten, die mehrteilig aus Kreuzschlitten und Y-Schlitten aufgebaut sind, sind auch die Y-Schlitten mehrteilig aufgebaut. Zweckmäßigerweise weisen die Y-Schlitten jeweils einen Grundkörper und einen um die erste Rotationsachse rotierbaren, an dem Grundkörper gelagerten Drehteller auf. Zweckmäßigerweise wird die Rotationsbewegung um die erste Rotationsachse durch einen an Bord des Y-Schlittens angeordneten und dadurch in Y-Achsrichtung bei der Bewegung des Y-Schlittens mitbewegten Rotationsantrieb erzeugt und auf den Drehteller eingeleitet. Als Rotationsantrieb eignet sich beispielsweise ein riemengetriebener Drehantrieb mit Scheckengetriebe.

In besonders bevorzugter Weise weist der Drehteller eine Drehteller-Schnittstelle zur Kopplung mit der Spannvorrichtung auf. Bei den Spannvorrichtungen handelt es sich um Bauteile, die ganz individuell auf das zu bearbeitende Werkstück abgestimmt sind, wodurch der Bedarf besteht, diese ebenso wie die zu bearbeitenden oder bearbeiteten Werkstücke austauschen zu können.

In besonders bevorzugter Weise weist die Spannvorrichtung einer jeweiligen Werkstückpositioniereinheit einen mit einer Gegen-Schnittstelle zur Kopplung mit der Drehteller-Schnittstelle ausgebildete Werkstückpalette und eine mit der Werkstückpalette verbundene, mehrere Werkstück-Spannelemente aufweisende Spanneinheit auf, wobei die Spannelemente zwischen einer Freigabestellung an einer das zu bearbeitende Werkstück festspannenden Spannstellung bewegbar sind. Zweckmäßigerweise handelt es sich bei der Spanneinheit um eine hydraulische Spanneinheit, bei der die Bewegung der Spannelemente mittels Hydraulikdruck durchgeführt wird.

Bei einer Weiterbildung der Erfindung ist ein Wechselshuttle zum Wechseln von Werkstücken oder Spannvorrichtungen vorgesehen, wobei das Wechselshuttle zwischen einer Bereitschaftsposition und einer in der Bearbeitungszone befindlichen Wechselposition bewegbar, insbesondere linear bewegbar ist, wobei in der Wechselposition entweder wenigstens ein bearbeitetes Werkstück oder wenigstens eine auszuwechselnde Spannvorrichtung von dem Wechselshuttle übernehmbar ist oder wenigstens ein Roh-Werkstück oder wenigstens eine einzuwechselnde Spannvorrichtung an zumindest eine Werkstückpositioniereinheit übergebbar ist.

Besonders bevorzugt ist es möglich, die Übernahme von Werkstücken oder Spannvorrichtungen bzw. Übergabe von Werkstücken oder Spannvorrichtungen synchron also an beiden Werkstückpositioniereinheiten gleichzeitig durchzuführen. Selbstverständlich kann der Wechsel an der einen Werkstückpositioniereinheit auch nach dem Wechsel an der anderen Werkstückpositioniereinheit durchgeführt werden. Die Voraussetzung für einen synchronen Wechsel an beiden Werkstückpositioniereinheiten ist die gleichzeitige Bereitstellung von zwei Werkstücken bzw. Spannvorrichtungen durch das Wechselshuttle.

In besonders bevorzugter Weise weist das Wechselshuttle mehrere Bestückungsplätze zur Aufnahme von Werkstückträgern oder Vorrichtungsträgern auf, wobei die Werkstückträger leer oder mit Werkstücken bestückt sind, und wobei die Vorrichtungsträger leer oder mit Spannvorrichtungen bestückt sind. Zweckmäßigerweise sind in der Wechselposition die der ersten und/oder zweiten Werkstückpositioniereinheit zugeordneten Bestückungsplätze des Wechselshuttles in die Bearbeitungszone eingefahren entweder unbeladen, um ein bearbeitetes Werkstück oder eine auszuwechselnde Spannvorrichtung zu übernehmen oder beladen um ein zu bearbeitendes Werkstück oder eine einzuwechselnde Spannvorrichtung an die zugeordnete Werkstückpositioniereinheit zu übergeben.

Zweckmäßigerweise weist der Werkstückträger eine Haltevorrichtung auf, mit der ein Werkstück oder ein Roh-Werkstück gehalten werden kann, wobei die Haltevorrichtung mehrere Halteelemente aufweist, die zwischen einer das zugeordnete Werkstück am Werkstückträger fixierenden Haltestellung und einer Freigabestellung bewegbar sind. Die Halteelemente können beispielsweise als Federspannelemente ausgestaltet sein. Zweckmäßigerweise weist auch der Vorrichtungsträger eine Haltevorrichtung auf, mit der eine auszuwechselnde Spannvorrichtung oder eine einzuwechselnde Spannvorrichtung gehalten werden kann, wobei die Haltevorrichtung ebenso mehrere Halteelemente aufweist, die zwischen einer der die Spannvorrichtung am Vorrichtungsträger fixierenden Haltestellung und einer Freigabestellung bewegbar sind. Auch hier können die Halteelemente als Federspannelemente ausgebildet sein.

Bei einer Weiterbildung der Erfindung weist das Wechselshuttle einen Rundschalttisch auf, der insbesondere um eine in Y-Achsrichtung verlaufende Drehachse drehbar ist, wobei das Wechselshuttle zumindest vier Bestückungsplätze aufweist, von denen sich in der Wechselposition zwei derart in der Bearbeitungszone befinden, dass eine Übergabe oder Übernahme ermöglich wird, und anschließend durch Drehen des Rundschalttisch die zwei anderen Bestückungsplätze in die Bearbeitungszone einschwenkbar sind. Das Schalten zwischen den Bestückungsplatz-Paaren wird zweckmäßigerweise dadurch ausgeführt, dass das Wechselshuttle ein Stück weit aus der Bearbeitungszone herausbewegt wird und anschließend der Rundschalttisch um die Drehachse gedreht wird.

Die Bewegung des Wechselshuttles zwischen der Bereitschaftsposition und der in der Bearbeitungszone befindlichen Wechselposition ist zweckmäßigerweise eine Linearbewegung, insbesondere in Z-Achsrichtung. Zur Ausführung dieser Linearbewegung dient ein Shuttle-Linearantrieb, der beispielsweise als Shuttle-Spindelantrieb ausgestaltet sein kann. Für die Drehbewegung des Rundschalttischs dient ein zweckmäßigerweise an Bord des Wechselshuttles befindlicher Drehantrieb.

Es ist möglich, dass das Wechselshuttle linear in Z-Achsrichtung bewegbar ist, wobei die Werkstückpositioniereinheit zwischen dem Werkstückschlitten und dem Wechselshuttle angeordnet ist.

Es ist möglich, dass die Spannvorrichtung und damit ein an der Spannvorrichtung zur Bearbeitung festgespanntes Werkstück um die in Y-Achsrichtung verlaufende erste Rotationsachse rotierbar ist. In derartiger Ausgestaltung mit den drei Raumachsen X, Y, Z und der ersten Rotationsachse als Bearbeitungsachsen findet eine Vier-Achsbearbeitung statt. Ferner ist es möglich, dass die Spannvorrichtung und damit das zu bearbeitende festgespannte Werkstück um die in Y-Achsrichtung verlaufende erste Rotationsachse und zusätzlich um eine in Z-Achsrichtung verlaufende zweite Rotationsachse rotierbar ist.

In derartiger Ausgestaltung findet eine Fünf-Achsbearbeitung statt. Mit der Flexibilität des erfindungsgemäßen Bearbeitungszentrum ist es möglich, Spannvorrichtungen zur Vier-Achsbearbeitung gegen Spannvorrichtungen zur Fünf-Achsbearbeitung auszutauschen und umgekehrt, wodurch eine Vier-Achsbearbeitung in beiden Bearbeitungseinheiten oder eine Fünf-Achsbearbeitung in beiden Bearbeitungseinheiten oder in hybrider Weise eine Vier-Achsbearbeitung in der einen Bearbeitungseinheit und eine Fünf-Achsbearbeitung in der anderen Bearbeitungseinheit möglich ist.

Bei einer Weiterbildung der Erfindung ist ein mit dem zugeordneten Werkzeugschlitten gekoppeltes Bearbeitungswerkzeug mittels einer Z-Achs-Führungseinrichtung zwischen der Bearbeitungszone und einer Werkzeugwechselposition bewegbar. Bei dem Bearbeitungswerkzeug kann es sich beispielsweise um einen Ein- oder Mehrspindler handeln, beispielsweise in Form eines Mehrspindel-Bohrkopfes. Das Bearbeitungswerkzeug kann alternativ jedoch auch als Fräswerkzeug in ein- oder mehrspindlicher Ausführungsform ausgeführt sein.

Besonders bevorzugt weist die Z-Achs-Führungseinrichtung wenigstens ein in Z-Achsrichtung verlaufende Führungsschiene auf, mittels der der zugeordnete Werkzeugschlitten mittels eines Z-Achs-Antriebs zwischen der Bearbeitungszone und der Werkzeugwechselposition bewegbar ist. Zweckmäßigerweise weist die Z-Achs-Führungseinrichtung zwei Führungsschienen auf. Zweckmäßigerweise ist der Z-Achs-Antrieb als Linearantrieb ausgestaltet, beispielsweise als Z-Spindelantrieb.

Bei einer Weiterbildung der Erfindung ist die Antriebsspindel mittels eines Werkzeug-Antriebsmotors antreibbar, der an Bord des Werkzeugschlittens ist. Der Werkzeug-Antriebsmotor wird zweckmäßigerweise also bei der Bewegung des Werkzeugschlittens in Z-Achsrichtung mitbewegt.

Erfindungsgemäß ist ein Werkzeugwechsler vorgesehen, mit dem insbesondere synchron ein Werkzeugwechsel an dem ersten Werkzeugschlitten und dem zweiten Werkzeugschlitten durchführbar ist, wenn diese sich in der Werkzeugwechselposition befinden. Der Werkzeugwechsler ist mittels einer Drehantriebsvorrichtung um eine Wechsler-Drehachse drehbar zwischen einem Werkzeugmagazin und dem wenigstens einen Werkzeugschlitten zur Übergabe oder Aufnahme von Bearbeitungswerkzeugen gelagert. Die Drehantriebsvorrichtung weist zweckmäßigerweise einen Drehantrieb auf, mit dem eine Drehbewegung insbesondere mit Hilfe eines Zahnradgetriebes auf den Werkzeugwechsler einleitbar ist.

In besonders bevorzugter Weise weist der Werkzeugwechsler wenigstens zwei Wechselarme auf, die jeweils einem der Werkzeugschlitten zugeordnet sind und jeweils eine Wechsler-Spannvorrichtung aufweisen. Mit Hilfe der Werkzeug-Wechsler-Spannvorrichtung lässt sich ein im Werkzeugmagazin befindliches Bearbeitungswerkzeug aufnehmen und am Wechselarm des Werkzeugwechslers haltern bzw. festspannen.

Zweckmäßigerweise sind die Wechselarme jeweils zwischen einer Gebrauchsposition, in der eine Übergabe oder Übernahme eines Bearbeitungswerkzeugs an den bzw. von dem Werkzeugschlitten oder an das bzw. von dem Werkzeugmagazin ermöglicht ist, und einer Transitposition, in der ein Verdrehen des Werkzeugwechslers um die Wechsler-Drehachse ermöglicht ist, verfahrbar. Die Verfahrbarkeit der Wechselarme erstreckt sich insbesondere entlang der Y-Achsrichtung.

Erfindungsgemäß weist der Werkzeugwechsler einen Grundkörper mit einer Außenfläche auf, an der wenigstens zwei Paare von Wechselarmen angeordnet sind, derart, dass die durch die beiden Wechselarme eines Paares von Wechselarmen jeweils aufgespannten Ebenen im Winkel, insbesondere senkrecht, zueinander stehen.

Zweckmäßigerweise befindet sich ein Paar von Wechselarmen an einem Werkzeugmagazin und ein paar von Wechselarmen an den Werkzeugschlitten. Über die Paare von Wechselarmen lassen sich die Wechselpositionen der Werkzeugschlitten und der Werkzeugmagazine synchron anfahren. Zweckmäßigerweise werden synchron vier Bearbeitungswerkzeuge aufgenommen, von denen zwei auszuwechselnde Bearbeitungswerkzeuge vom Werkzeugschlitten aufgenommen werden und zwei einzuwechselnde Werkzeuge vom Werkzeugmagazin übernommen werden. Im nachfolgenden Takt können dann die vier Bearbeitungswerkzeuge synchron übergeben werden, d. h. die beiden einzuwechselnden Bearbeitungswerkzeuge werden an die Werkzeugschlitten übergeben, wobei gleichzeitig die zwei auszuwechselnden Bearbeitungswerkzeuge an ein zweites Werkzeugmagazin übergeben werden.

Bei einer Weiterbildung der Erfindung ist wenigstens ein Werkzeugmagazin zur Speicherung von Bearbeitungswerkzeugen vorgesehen, aufweisend zwei Werkzeug-Wechselpositionen, wobei jeder Werkzeug-Wechselposition jeweils einem Wechselarm zugeordnet ist. Zweckmäßigerweise sind zwei Werkzeugmagazine vorgesehen, wobei die Werkzeugmagazine Teil beider Bearbeitungseinheiten sind. Die beiden Werkzeugmagazine können also beiden Bearbeitungseinheiten zugeordnet sein, derart, dass abwechselnd einzuwechselnde Bearbeitungswerkzeuge entweder von dem einen Werkzeugmagazin oder von dem anderen Werkzeugmagazin übernommen werden oder auszuwechselnde Werkzeuge dort abgelegt werden.

Bei einer Weiterbildung der Erfindung weist das Bearbeitungszentrum eine Steuereinrichtung auf, mit der sich sämtliche Bewegungsabläufe überwachen, steuern oder regeln lassen. Zu den Bewegungsabläufen zählen beispielsweise die Bearbeitung eines in der Bearbeitungszone befindlichen Werkstücks und damit die Positionierung der Werkstückpositioniereinheit in X-Achsrichtung, Y-Achsrichtung und gegebenenfalls die Rotationslage des Drehtellers sowie die Positionierung des Werkzeugschlittens in Z-Achsrichtung. Ferner zählen dazu die Bewegungsabläufe beim Ein- bzw. Auswechseln von Werkstücken bzw. Spannvorrichtungen und beim Ein- oder Auswechseln von Werkzeugen. Zweckmäßigerweise weist das Bearbeitungszentrum verschiedene Messsysteme auf, von denen ein Messsystem als X-Achs-Messsystem, eines als Y-Achs-Messsystem und eines als Z-Achs-Messsystem ausgestaltet ist. Auch den Rotationsachsen sind entsprechende Messsysteme zugeordnet.

Die Steuereinrichtung kann beispielsweise in Form einer speicherprogrammierbaren Steuereinheit (SPS-Einheit) ausgestaltet sein.

Ein bevorzugtes Ausführungsbeispiel der Erfindung ist in der Zeichnung dargestellt und im Folgenden näher erläutert. In der Zeichnung zeigen:
- Figur 1: eine perspektivische Darstellung der wesentlichen Komponenten eines bevorzugten Ausführungsbeispiels des erfindungsgemäßen Bearbeitungszentrums,
- Figur 2: eine Frontansicht auf das Bearbeitungswerkzeug von Figur 1,
- Figur 3: eine Frontansicht auf das Bearbeitungswerkzeug von Figur 1 ohne Spannvorrichtungen,
- Figur 4: eine Seitenansicht des Bearbeitungszentrums von Figur 1,
- Figur 5: eine vergrößerte und teilweise geschnittene Darstellung der Einzelheit X aus Figur 4,
- Figur 6: eine Draufsicht auf das Bearbeitungszentrum von Figur 1,
- Figur 7: eine perspektivische Ansicht einer ersten Ausführungsform einer Spannvorrichtung des erfindungsgemäßen Bearbeitungszentrums und
- Figur 8: eine perspektivische Ansicht einer zweiten Ausführungsform einer Spannvorrichtung des erfindungsgemäßen Bearbeitungszentrums.

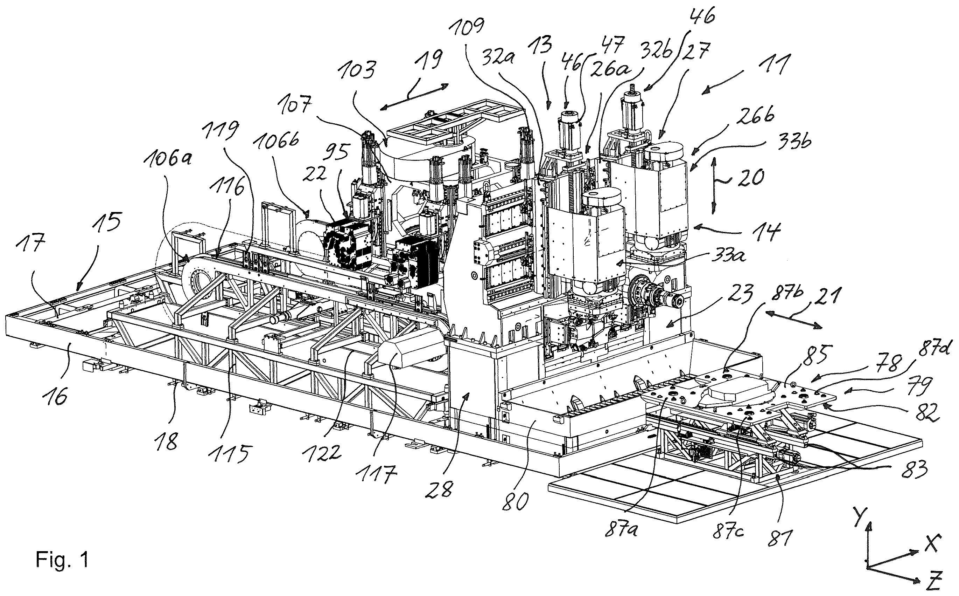

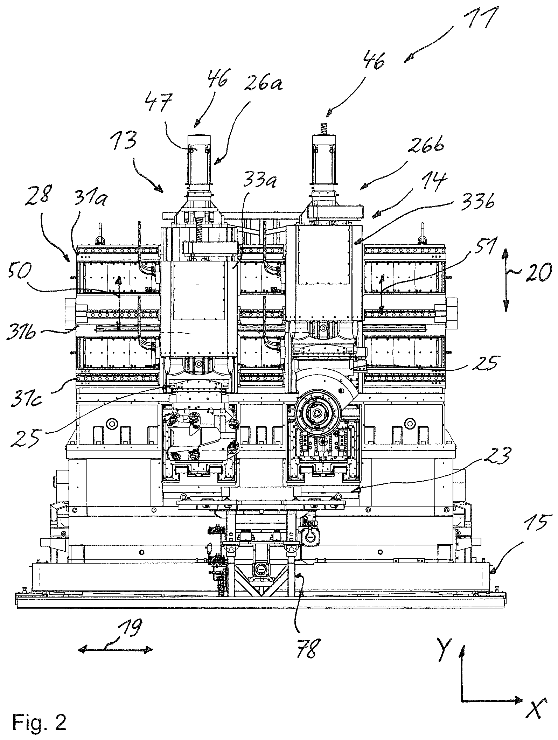

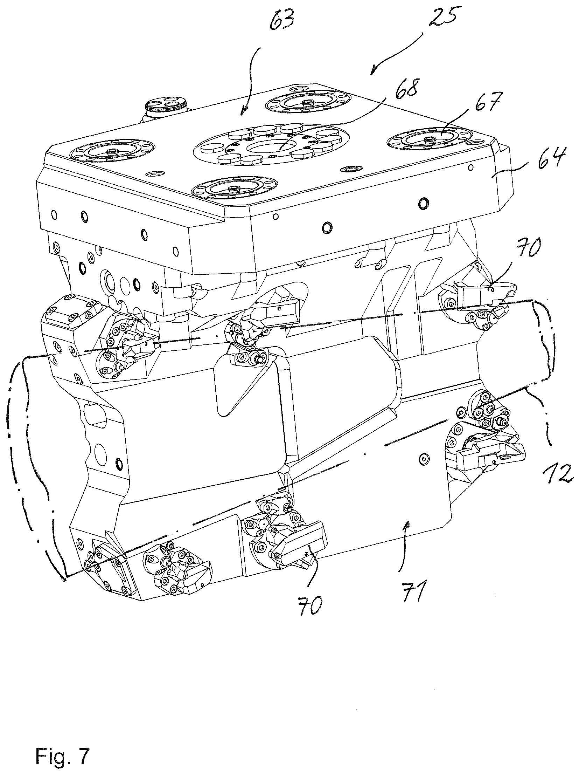

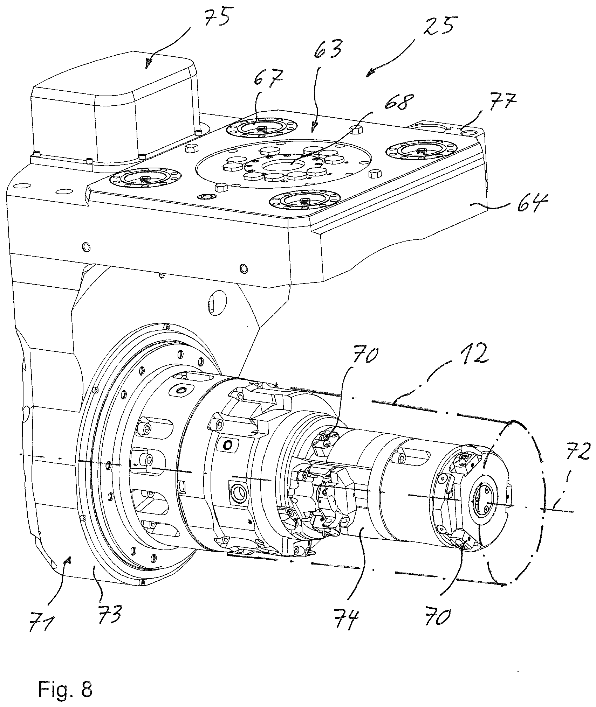

Die Figuren 1 bis 8 zeigen ein bevorzugtes Ausführungsbeispiel des erfindungsgemäßen Bearbeitungszentrums 11 zur mechanischen, insbesondere spanabhebenden Bearbeitung von Werkstücken 12. Die in den Figuren 7 und 8 lediglich schematisch dargestellten Werkstücke 12 können beispielsweise Getriebegehäuse, Kupplungsgehäuse, Elektromotorengehäuse oder Lenkgehäuse sein. Dies ist jedoch lediglich eine beispielhafte Aufzählung der verschiedenen Arten von Werkstücken. Es sind durchaus weitere, hier nicht genannte Arten von Werkstücken mit dem erfindungsgemäßen Bearbeitungszentrum 11 bearbeitbar.

Kernstück des Bearbeitungszentrums 11 sind zwei Bearbeitungseinheiten, eine erste Bearbeitungseinheit 13 und eine in X-Achsrichtung eines durch drei senkrecht aufeinander stehende Achsrichtungen X, Y, Z gebildeten Koordinatensystems benachbart zu der ersten Bearbeitungseinheit 13 angeordnete zweite Bearbeitungseinheit 14. Die Bearbeitungseinheiten 13, 14 sind in Bezug auf die nicht auswechselbaren Komponenten, auf die hier später nachfolgend noch näher eingegangen wird, im Wesentlichen identisch zueinander aufgebaut.

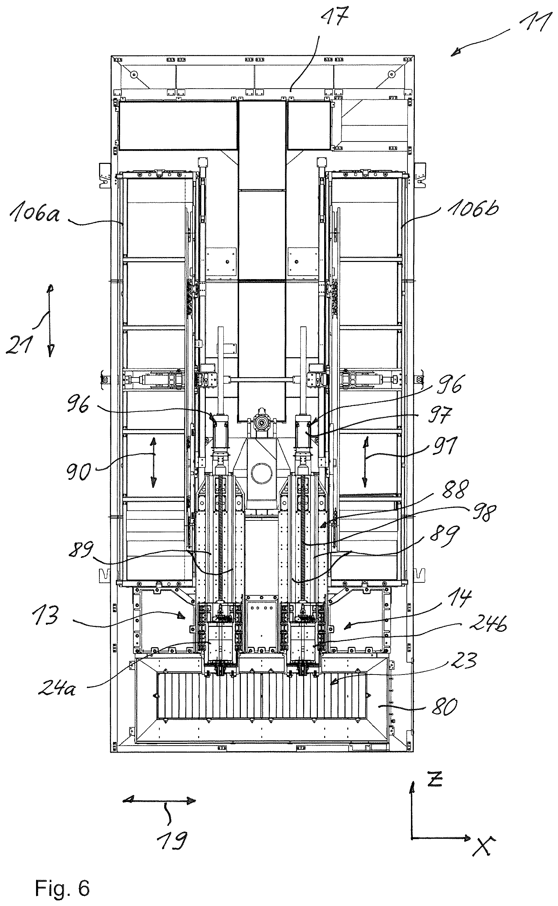

Wie insbesondere die Zusammenschau der Figuren 1 und 6 zeigt weist das Bearbeitungszentrum 11 ein Grundgestell 15 auf, mit einem den seitlichen äußeren Abschluss bildenden Grundrahmen 16 von dessen Innenwandung zahlreiche Grundstreben 17 zwischen zwei gegenüberliegenden Rahmenteilen des Grundrahmens 16 verlaufen. Die Grundstreben 17 erstrecken sich im Wesentlichen in einer durch die X-Achsrichtung 19 und Z-Achsrichtung 21 aufgespannten Ebene. An den Unterseiten der Grundstreben 17 und gegebenenfalls an den Unterseiten der äußeren Rahmenteile befinden sich Auflageelemente (nicht dargestellt), über die das gesamte Bearbeitungszentrum 11 auf dem Untergrund aufliegt. Die Auflageelemente sind in Y-Achsrichtung 20 höhenverstellbar, wodurch eine exakt horizontale Ausrichtung des Bearbeitungszentrums 11 auch bei unebenem Untergrund möglich ist. Zur Höhenverstellung der Auflageelemente dienen von der Außenwand der Rahmenteile nach außen abstehende Betätigungselemente 18, wodurch eine Höhenverstellung in relativ einfacher Weise durch eine gute Zugänglichkeit der Betätigungselemente 18 durchführbar ist.

Wie insbesondere in Figur 1 gezeigt, sitzen die beiden Bearbeitungseinheiten 13, 14 auf dem Grundgestell 15. Die erste Bearbeitungseinheit 13 weist einen in Z-Achsrichtung 21 bewegbaren, mit einem Bearbeitungswerkzeug 22 zur Bearbeitung eines in einer Bearbeitungszone 23 angeordneten Werkstücks 12 bestückbaren ersten Werkzeugschlitten 24a und eine in einer X-Achsrichtung 19 und in einer Y-Achsrichtung 20 bewegbare, mit einer Spannvorrichtung 25 zur Aufnahme und zum Festspannen des zu bearbeitenden Werkstücks 12 bestückbare erste Werkstückpositioniereinheit 26a. Die zweite Bearbeitungseinheit 14 ist unabhängig von der ersten Bearbeitungseinheit betreibbar und befindet sich in X-Achsrichtung 19, sich längs der Z-Achsrichtung erstreckend benachbart zu der ersten Bearbeitungseinheit 13.

Die zweite Bearbeitungseinheit 14 besitzt einen in der Z-Achsrichtung 21 ebenfalls mit einem Bearbeitungswerkzeug 22 bestückbaren zweiten Werkzeugschlitten 24b und eine in der X-Achsrichtung 19 und der Y-Achsrichtung 20 bewegbare, ebenfalls mit einer Spannvorrichtung zur Aufnahme und zum Festpannen des zu bearbeitenden Werkstücks 12 bestückbare zweite Werkstückpositioniereinheit 26b.

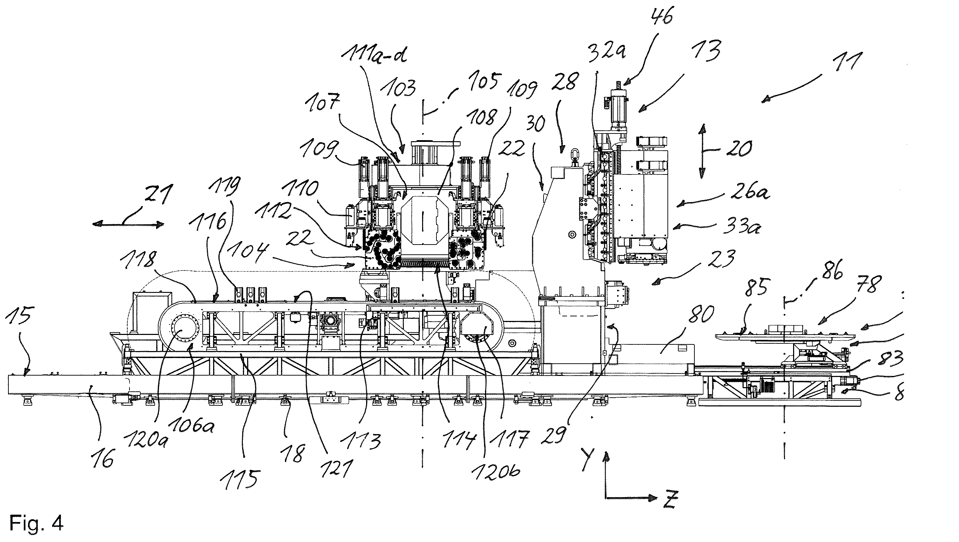

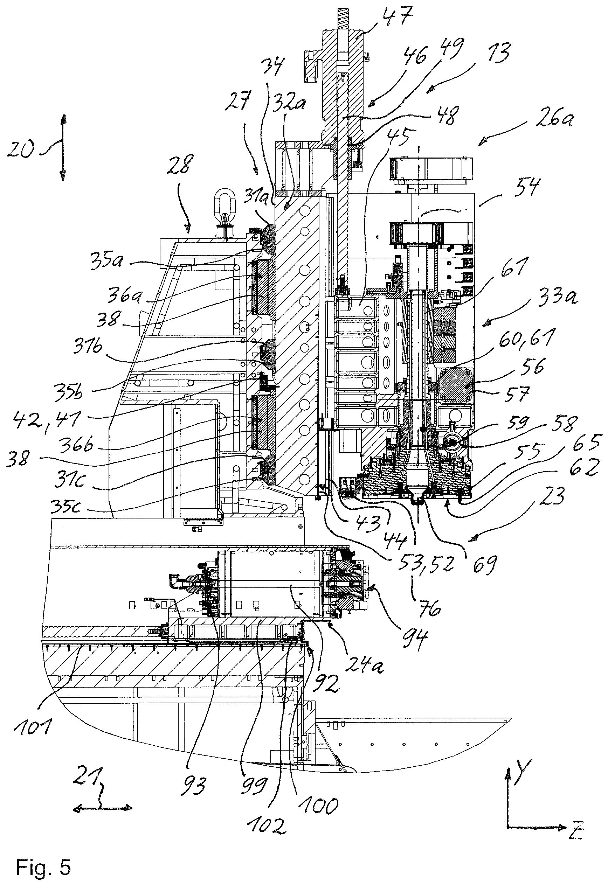

Wie insbesondere in den Figuren 1 und 5 gezeigt, ist den Bearbeitungseinheiten 13, 14 für die unabhängig voneinander durchführbare Bewegungen in X-Achsrichtung 19 eine gemeinsame Führungseinrichtung 27 zugeordnet. Die Führungseinrichtung 27 befindet sich an einem am Grundgestell 15 angeordneten Maschinenbett, das im vorliegenden Fall als Vertikalbett ausgebildet ist. Das Maschinenbett 28 erstreckt sich im Wesentlichen über die gesamte Breite des Grundgestells 15 und besitzt eine Vorderseite 29 (Fig.4), an der die Führungseinrichtung 27 angeordnet ist. Der Vorderseite 29 entgegengesetzt ist eine Rückseite 30 (Fig.4) vorgesehen. Das Maschinenbett 28 trennt die beiden Bearbeitungseinheiten 23 in einen werkstückseitigen Vorderbereich, in dem in der Bearbeitungszone 23 eine Bearbeitung von Werkstücken 12 durch die zugeordneten Bearbeitungswerkzeuge 22 stattfindet und einen rückwärtigen, werkzeugseitigen Bereich, in dem das Handling der Bearbeitungswerkzeuge 22 - wie nachfolgend noch näher beschrieben - stattfindet. Lediglich die Werkzeugschlitten 24a, 24b fahren in nachfolgend noch näher beschriebener Weise zwischen dem rückwärtigen werkzeugseitigen Bereich und dem vorderen werkstückseitigen Bereich hin und her, während alle anderen Komponenten auf ihrer entsprechenden Seite bleiben.

Die Führungseinrichtung 27, die auch als X-Führungseinrichtung bezeichnet werden könnte, ist wie bereits vorstehend erwähnt an der Vorderseite des Maschinenbetts 28 angeordnet und erstreckt sich insgesamt oberhalb der Verfahrebene der beiden Werkzeugschlitten 24a, 24b. Dies bedeutet, dass die beiden Werkstückpositioniereinheiten 26a, 26b über den Werkzeugschlitten 24a, 24b hängen, das zu bearbeitende Werkstück 12 folglich hängend bearbeitet wird. Die Führungseinrichtung 27 weist mehrere, im gezeigten Beispielsfall drei Führungsschienen 31a, 31b, 31c auf, die jeweils einerseits an der Vorderseite 29 des Maschinenbetts 28 befestigt sind und andererseits mit den beiden Werkstückpositioniereinheiten 26a, 26b in nachfolgend noch beschriebener Weise in Eingriff stehen.

Wie bereits erwähnt, besitzt jede Bearbeitungseinheit 13, 14 eine Werkstückpositioniereinheit 26a, 26b. Beide Werkstückepositioniereinheiten 26a, 26b sind entlang den Führungsschienen 31a-c in X-Achsrichtung 19 linear beweglich geführt.

Die erste Werkstückpositioniereinheit 26a besitzt einen ersten Kreuzschlitten 32a und einen in Y-Achsrichtung 20 verfahrbar am ersten Kreuzschlitten 32a gelagerten ersten Y-Schlitten 33a. Die zweite Werkstückpositioniereinheit 26b besitzt einen ebenfalls entlang den Führungsschienen 31a-c bewegbar gelagerten zweiten Kreuzschlitten 32b und einen in Y-Achsrichtung 19 verfahrbaren zweiten Kreuzschlitten 32b gelagerten zweiten Y-Schlitten 33b.

Die beiden Kreuzschlitten 32a, 32b sind sehr massive Bauteile, beispielsweise aus geeignetem Gussmaterial gefertigt, da sie jeweils die beiden zugeordneten Y-Schlitten 33a, 33b tragen müssen.

Die beiden Kreuzschlitten 32a, 32b besitzen jeweils eine den Führungsschienen 31a-c zugeordnete Kreuzschlitten-Rückwand 34 an denen, wie insbesondere in Figur 5 gezeigt, Führungsschuhe 35a-c befestigt, die die zugeordneten Führungsschienen 31a-c umgreifen, wodurch der Kreuzschlitten 32a, 32b am Maschinenbett 28 gelagert und über die Führungsschienen 31a-c in X-Achsrichtung 19 linear beweglich geführt ist. Die Ausgestaltung und Anordnung der Führungsschuhe 35a-c ist an beiden Kreuzschlitten 32a, 32b identisch. Wie bereits erwähnt, sind die beiden Werkstückpositioniereinrichtungen 26a, 26b pro aktiv angetrieben und jeweils unabhängig voneinander in der X-Achsrichtung 19 entlang den Führungsschienen 31a-c bewegbar gelagert.

Zum Antrieb ist jeder Werkstückpositioniereinheit 26a, 26b wenigstens ein X-Achs-Antrieb 36a, 36b (Fig.5) zugeordnet, die im gezeigten Beispielsfall als Linearantrieb in Form von Linearmotoren ausgebildet sind. Im gezeigten Beispielsfall sind jeder Werkstückpositioniereinheit 26a, 26b zwei Linearmotoren zugeordnet, so dass insgesamt vier Linearmotoren für die beiden Werkstückpositioniereinheiten 26a, 26b zur Verfügung gestellt sind.

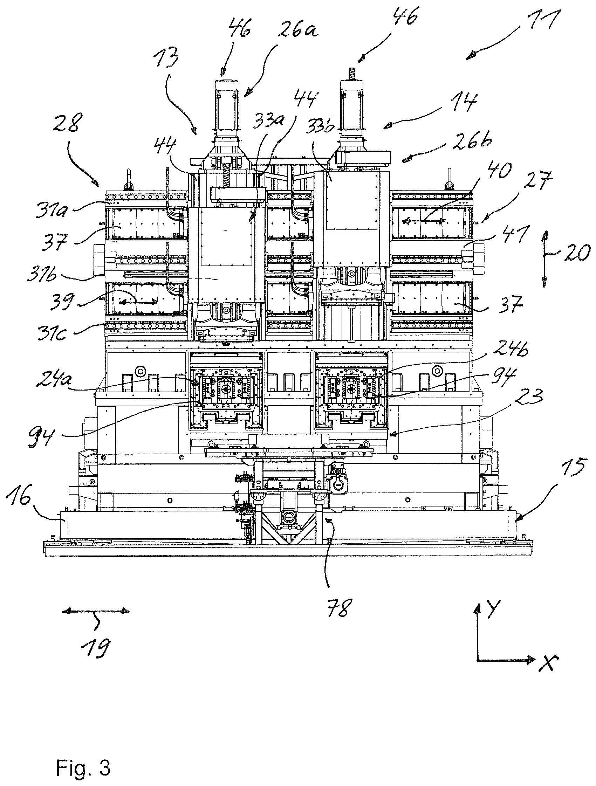

Wie insbesondere die Zusammenschau der Figuren 1 und 5 gezeigt, gibt es Komponenten der insgesamt vier Linearmotoren, die für beide Werkstückpositioniereinheiten 26a, 26b zur Verfügung stehen. Im gezeigten Beispielsfall befinden sich die Linearmotoren zwischen einander benachbarten Führungsschienen 31a-c, also zwischen oberer Führungsschiene 31a und mittlerer Führungsschiene 31b und zwischen mittlerer Führungsschiene 31b und unterer Führungsschiene 31c. Die Linearmotoren umfassen jeweils Permanentmagnetsegmente 37 (Fig.3), die an der Vorderseite 29 des Maschinenbetts 28 befestigt sind und damit den Statorteil des Linearmotors bilden. Die Permanentmagnetsegmente 37 erstrecken sich in X-Achsrichtung 19 im Wesentlichen über die gesamte in X-Achsrichtung 19 ausgebildete Breite des Maschinenbetts 28. Den Permanentmagnetsegmenten 37 sind jeweils an der Rückseite des Kreuzschlittens 32a, 32b angeordnete und dort befestigte Läuferelemente 38 zugeordnet, die jeweils wenigstens einen bestrombaren Elektromagneten (nicht dargestellt) aufweisen. Insofern befinden sich an der Kreuzschlitten-Rückwand 34 des ersten Kreuzschlittens 32a zwei Läuferelemente 38, von denen ein Läuferelement 38 der oberen Permanentmagnetsegmentbahn und das andere Läuferelement 38 der unteren Permanentmagnetsegmentbahn zugeordnet ist. Auch an der Kreuzschlitten-Rückwand 34 des zweiten Kreuzschlittens 32b befinden sich analog zwei Läuferelemente 38, von denen ein Läuferelement der oberen Permanentmagnetsegmentbahn 37 und das andere Läuferelement 38 der unteren Permanentmagnetsegmentbahn zugordnet ist.

Durch entsprechende Ansteuerung der Linearmotoren lassen sich also die beiden Werkstückpositioniereinheiten 26a, 26b unabhängig voneinander jeweils in X-Achsrichtung 19 bewegen, wobei sich die erste Werkstückpositioniereinheit 26a entlang einer sogenannten X₁-Achse 39 (Fig.3) und die zweite Werkstückpositioniereinheit 26b entlang einer X₂-Achse 40 (Fig.3) bewegt.

Zur Positionsüberwachung der jeweiligen Positionen der Werkstückpositioniereinheiten 26a, 26b dient ein X-Achs-Messsystem 41, das eine insbesondere im Bereich der mittleren Führungsschiene 35b angeordnete, sich ebenfalls in X-Achsrichtung erstreckende Messschiene 42 aufweist. Das X-Achs-Messsystem 41 kann als optisches, induktives oder magnetrestriktives Messsystem ausgestaltet sein.

Wie bereits erwähnt, umfassen die Werkstückpositioniereinheiten 26a, 26b neben den Kreuzschlitten 32a, 32b jeweils einen Y-Schlitten 33a, 33b. Der erste Kreuzschlitten 32a besitzt hierzu eine der Kreuzschlitten-Rückwand 34 entgegengesetzt angeordnete Kreuzschlitten-Vorderwand 43 (Fig.5), an der zwei in Y-Achsrichtung 19 verlaufende Y-Führungsschienen 44 befestigt sind.

Der im Folgenden beschriebene Aufbau des Y-Schlittens 33a und die dazugehörigen Komponenten der ersten Werkstückpositioniereinheit 26a ist identisch auch so an der zweiten Werkstückpositioniereinheit 26b verwirklicht, so dass die folgende Beschreibung mit Bezug zur ersten Werkstückpositioniereinheit 26a auch für die zweite Werkstückpositioniereinheit 26b und den dort angeordneten Y-Schlitten 33b gilt.

Wie insbesondere in Figur 5 gezeigt, besitzt der Y-Schlitten 32a, 32b einen Grundkörper 45 (Fig.5), der mit den beiden Y-Führungsschienen 44 gekoppelt ist, derart, dass er in Y-Achs-richtung 20 mit Hilfe eines an Bord der Werkstückpositioniereinheit 26a angeordneten Y-Achs-Antriebs 46 auf und ab bewegbar ist. Der Y-Achs-Antrieb 46 ist als Linearantrieb ausgestaltet, jedoch im Gegensatz zum X-Achs-Antrieb 36a wird hier ein Linearantrieb in Form eines Spindelantriebs verwendet. Der Y-Achs-Spindelantrieb besitzt einen insbesondere an der Oberseite des Kreuzschlittens 32a, 32b angeordneten Spindelmotor 47, der eine Spindelmutter 48 rotatorisch antreibt. Die Spindelmutter 48 ist von einer Y-Achs-Antriebsspindel 49 durchsetzt, die in Folge der Rotation der Spindelmutter 48 eine Linearbewegung durchführt, ohne selbst zu rotieren. Die Y-Achs-Antriebsspindel 49 ist unterseitig am Grundkörper 45 befestigt, so dass eine Linearbewegung der Y-Achs-Antriebsspindel 49 in Y-Achs-Richtung 20 in eine entsprechende Bewegung des Grundkörpers 45 und somit des Y-Schlittens 33a, 33b in Y-Achsrichtung bewirkt. Zur Positionsbestimmung des Y-Schlittens der im Falle des an der ersten Werkstückpositioniereinheit 26a ausgebildeten ersten Y-Schlittens 33a entlang einer Y₁-Achse 50 bewegbar ist, während der zweite Y-Schlitten 33b an der anderen Werkstückpositioniereinheit 26b entlang einer Y₂-Achse 51 bewegbar ist, wird ein Y-Achs-Messsystem 52 angesetzt. Ähnlich dem X-Achs-Messsystem 41 ist beim Y-Achs-Messsystem 52 eine in Y-Achsrichtung 20 im Bereich einer der beiden Y-Führungsschienen 44 angeordnete Messschiene 53 vorgesehen, mit der die Ist-Position des zugeordneten Y-Schlittens 33a, 33b detektierbar ist.

Die beiden Y-Schlitten 33a, 33b weisen jeweils einen um eine erste Rotationsachse 54 (Fig.5), die sich in Y-Achsrichtung 20 erstreckt, rotierbaren, an dem Grundkörper 45 gelagerten Drehteller 55 auf. Die erste Rotationsachse 54 an der ersten Werkstückpositioniereinheit 26a kann auch als B1-Rotationsachse und entsprechend an der zweiten Werkstückpositioniereinheit 26b als B2-Rotationsachse bezeichnet werden.

Die Rotationsbewegung des Drehtellers 55 wird durch einen Rotationsantrieb 56 an Bord des jeweiligen Y-Schlittens 33a, 33b erzeugt. Der Rotationsantrieb 56 weist einen Antriebsmotor 57 auf, der über einen Riemenantrieb (nicht dargestellt) eine Antriebsschnecke 58 antreibt, die mit einem Abtriebs-Zahnrad 59 kämmt, das wiederum derart drehfest mit dem Drehteller 55 verbunden ist, dass eine auf das Antriebs-Zahnrad 59 eingeleitete Rotationsbewegung auf den Drehteller 55 übertragen wird.

Auch die Drehposition des Drehtellers 55 wird detektiert und überwacht und zwar mittels eines Drehpositions-Messsystems 60, das eine Messhülse 61 besitzt, die auf einem mit dem Drehteller und dem Zahnabtriebs-Zahnrad 59 verbundenen Hohlwelle 61 sitzt. Über die Hohlwelle 61 ist es möglich, elektrische Energie, zum Drehteller 55 zu führen, beispielsweise mittels in der Hohlwelle 61 befindlichen und diese durchsetzenden elektrischen Leitungen.

Ein wichtiger Aspekt ist, dass der Drehteller 55 eine Drehteller-Schnittstelle 62 zur Kopplung mit der Spannvorrichtung 25 aufweist.

Die Figur 7 zeigt eine beispielhafte Ausgestaltung der Spannvorrichtung 25, mit der ein zu bearbeitendes Werkstück 12 bei der Bearbeitung festgespannt ist.

Die Spannvorrichtung 25 besitzt eine mit einer Gegen-Schnittstelle 63 zur Kopplung mit der Drehteller-Schnittstelle 62 ausgebildete Werkstückpalette 64. Wie die Zusammenschau der Figuren 5 und 7 zeigt, ist die Werkstückpalette 64 mit ihrer Gegen-Schnittstelle 63 drehfest mit der Drehteller-Schnittstelle 62 verbunden, so dass die Spannvorrichtung 25 die Rotationsbewegung um die erste Rotationsachse 54 mitmacht.

Wie insbesondere in Figur 5 gezeigt, befindet sich an der Drehteller-Schnittstelle 62 mindestens ein Indexierstift 65, der in entsprechende Bohrungen an der Gegen-Schnittstelle führbar sind, womit eine korrekte Ausrichtung der Spannvorrichtung 25 gegenüber dem Drehteller 25 erzielt wird. An der Gegen-Schnittstelle befindet sich ferner Aufnahmen 67, in die Aufnahmeelemente an der Drehteller-Schnittstelle 62 einfahren und damit für eine drehfeste Befestigung der Spannvorrichtung 25 am Drehteller 55 sorgen.

Ferner zeigt die Figur 7 insbesondere in zentraler Lage eine Versorgungsöffnung 68, in die ein an der Drehteller-Schnittstelle 62 ausgebildeter Zapfen 69 eingreifen kann. Dies ermöglicht die hydraulische Versorgung der Spannvorrichtung 25 mit Hydraulikfluid, insbesondere Hydrauliköl, das über die Hohlwelle 61 mittels Hydraulikanälen zugeführt wird.

Wie insbesondere in Figur 7 gezeigt, besitzt die Spannvorrichtung 25 zusätzlich zur Werkstückpalette 64 eine mehrere Werkstück-Spannelemente 70 aufweisende Spanneinheit 71. Die Werkstück-Spannelemente 70 sind zwischen einer Freigabestellung und einer das zu bearbeitende Werkstück festspannenden Spannstellung bewegbar. Die Bewegung der Spannelemente 70 wird zweckmäßigerweise hydraulisch erzeugt.

Es ist darauf hinzuweisen, dass die Gegen-Schnittstelle 63 an der Werkstückpalette 64 unabhängig von der Ausgestaltung der Spanneinheit 71 stets dieselbe Ausgestaltung hat und damit immer auf die Drehteller-Schnittstelle 62 am Y-Schlitten 33a, 33b passt. Die Spanneinheit 71 und die dort angeordneten Werkstück-Spannelemente 70 sind hingegen individuell auf ein zu bearbeitenden Werkstücktyp abgestimmt, so dass der Bedarf besteht, bei einem Werkstücktyp-Wechsel auch die Spannvorrichtung 25 auszutauschen, was ohne Weiteres, wie im Folgenden näher beschrieben, möglich ist.

Die in Figur 7 gezeigte Spannvorrichtung ist als Vier-Achs-Spannvorrichtung ausgestaltet, d. h. die mit einer derartigen Spannvorrichtung ausgestattete Bearbeitungseinheit 13 führt eine Vier-Achs-Bearbeitung durch, wobei das zu bearbeitende Werkstück in X-Achsrichtung, in Y-Achsrichtung und zusätzlich um die erste Rotationsachse bewegbar ist, und wobei der zugeordnete Werkzeugschlitten 24a, 24b mit dem Bearbeitungswerkzeug 22 in Z-Achs-Richtung 21 bewegbar ist.

Die Figur 8 zeigt eine alternative Ausgestaltung der Spannvorrichtung 25 also einen anderen Spannvorrichtungs-Typ, der hier als Fünf-Achs-Spannvorrichtung ausgebildet ist. Im Gegensatz zu der in Figur 7 beispielhaft gezeigten 4-Achs-Spannvorrichtung weist die in Figur 8 beispielhaft gezeigte Fünf-Achs-Spannvorrichtung eine zusätzliche Rotationsachse also eine zweite Rotationsachse 72 auf, die sich in der Gebrauchsstellung in Z-Achs-Richtung 21 erstreckt. Auch diese Spannvorrichtung 25 besitzt eine Werkstückpalette 64 mit einer Gegen-Schnittstelle 63, die exakt identisch zur Gegen-schnittstelle zur Vier-Achs-Spannvorrichtung ist und zur Ankopplung an die Drehteller-Schnittstelle 62 dient. Jedoch ist im Gegensatz zur Vier-Achs-Spannvorrichtung die Spanneinheit 71 anders aufgebaut. Die Spanneinheit besitzt hierzu einen Spanneinheits-Grundkörper 73, an dem eine Spannwelle 74, die um die zweite Rotationsachse 72 drehbar gelagert ist. Auch hier sind Werkstück-Spannelemente 70 vorgesehen, die zweckmäßigerweise hydraulisch betätigt sind und zwar an der Mantelfläche der Spannwelle 74 angeordnet. Das zu bearbeitende Werkstück 12 wird hier auf die Spannwelle 74 gestülpt, d. h. das Werkstück 12 ist ein Hohlprofil, das auf die Spannwelle 74 aufgesteckt werden kann. Die Rotationsbewegung der Spannwelle 74 wird mittels eines weiteren Rotationsantriebs 75 erzeugt, der an Bord der Spannvorrichtung 25 ist. Zur Energieversorgung dieses Rotationsantriebs 75 dient eine am Drehteller befindliche Energieübertragungs-Schnittstelle 76 die mit einer Energieübertragungs-Gegen-Schnittstelle 77 zusammenwirkt, die insbesondere an der Umfangsfläche der Werkzeugpalette 64 angeordnet ist.

Das Bearbeitungszentrum 11 besitzt ferner ein Wechselshuttle 78 zum Wechseln von Werkstücken 12 oder Spannvorrichtungen 25. Das Wechselshuttle 78 ist zwischen einer in der Bearbeitungszone 23 befindlichen Wechselposition (nicht dargestellt) und einer Bereitschaftsposition 79 (Figur 1) verfahrbar, insbesondere linear in Z-Achsrichtung 21 verfahrbar. Die Bearbeitungszone 23 der beiden Bearbeitungseinheiten 13, 14 ist mittels einer Einhausung (nicht dargestellt) eingehaust. Dargestellt ist lediglich in Figur 1 der untere Teil der Einhausung in Form eines Sammelbeckens 80, in der Kühlschmierstoff und Späne gesammelt und dann mittels einer Fördereinrichtung (nicht dargestellt) aus dem Sammelbecken 80 heraus beförderbar sind. In der Wechselposition des Wechselshuttles 78 findet keine Bearbeitung der Werkstücke statt und das Wechselshuttle 78 ist daher über ein öffenbares Tor in die Bearbeitungszone 23 eingefahren.

Das Wechselshuttle 78 ist dazu vorgesehen, in der Wechselposition entweder wenigstens ein bearbeitetes Werkstück 12 oder wenigstens eine auszuwechselnde Spannvorrichtung zu übernehmen oder wenigstens ein Roh-Werkstück oder wenigstens eine einzuwechselnde Spannvorrichtung 25 an zumindest eine Werkstückpositioniereinheit 26a, 26b zu übergeben.

Wie insbesondere in Figur 1 gezeigt, besitzt das Wechselshuttle 78 ein insbesondere außerhalb des Grundgestells 15 ortsfest auf dem Untergrund, beispielsweise einer Auflage, befestigtes Shuttlegestell 81, an dessen Oberseite zwei parallel zueinander ausgerichtete in Z-Achsrichtung 21 verlaufende Shuttle-Führungsschienen 83 ausgebildet sind. Auf den Shuttle-Führungsschienen 83 ist ein Shuttleschlitten 82 linear verfahrbar geführt, der dann zwischen der Bereitschaftsposition und der in die Bearbeitungszone 23 eingefahrenen Wechselposition bewegbar ist. Für die Linearbewegung des Shuttleschlittens 82 ist ein insbesondere an Bord des Wechselshuttles 78 angeordneter Linearantrieb, beispielsweise in Form eines Shuttle-Spindelantriebs 84 zuständig.

Der Shuttleschlitten 82 wiederum besitzt einen Rundschalttisch 85, der um eine in Y-Achsrichtung 20 verlaufende Shuttle-Drehachse 86 (Fig.4) drehbar ist.

Für die Einleitung der Drehbewegung auf den Rundschalttisch 85 ist ein an Bord des Wechselshuttles 78 befindlicher Drehantrieb (nicht dargestellt) zuständig. An der Oberseite des Rundschalttischs 85 befinden sich im gezeigten Beispielsfall vier Bestückungsplätze 87a-d, die entweder mit Werkstückhaltern (nicht dargestellt) oder Vorrichtungshaltern (nicht dargestellt) bestückt sind. Bei einem Werkstückwechsel befinden sich in der Regel vier Werkstückhalter auf den zugeordneten Bestückungsplätzen 87a-d des Rundschalttischs 85. In der in die Bearbeitungszone 23 eingefahrenen Wechselposition ist es möglich, dass die in der Wechselposition eingefahrenen Bestückungsplätze 87a, 87b beispielsweise unbestückte Werkstückhalter tragen, so dass eine Übergabe von bearbeiteten Werkstücken an den Werkstückhalter des Wechselshuttles 78 möglich ist. Es ist möglich, die Übergabe der zu bearbeitenden Werkstücke zu synchronisieren, d. h. dass also gleichzeitig ein fertig bearbeitetes Werkstück der ersten Bearbeitungseinheit 13 und ein fertig bearbeitetes Werkstück der zweiten Bearbeitungseinheit 14 an das Wechselshuttle 78 übergeben werden.

Bei dieser Wechselvariante befinden sich auf den anderen, nicht in die Bearbeitungszone 23 eingefahrenen Bestückungsplätzen 87c, 87d des Rundschalttischs 85 wiederum Werkstückhalter, die jedoch mit Roh-Werkstücken bestückt sind.

Nach der Übergabe der bearbeiteten Werkstücke 12 wird der Rundschalttisch 85 um 180° gedreht, wobei hier zweckmäßigerweise zunächst ein Ausfahren des Shuttleschlittens 82 ein Stück weit aus der Bearbeitungszone 23 heraus stattfindet, damit die Drehbewegung durchgeführt werden kann. Nach der Drehung sind die beiden mit Roh-Werkstücken bestückten Werkstückhalter den beiden Werkstückpositioniereinheiten 26a, 26b zugeordnet. Durch anschließendes Einfahren des Shuttleschlittens 82 in die Wechselposition können dann die Roh-Werkstücke an die jeweiligen Werkstückpositioniereinheiten bzw. die dort befindlichen Spannvorrichtungen 25 übergeben werden.

Wie bereits erwähnt besitzt jede Bearbeitungseinheit 13, 14 einen Werkzeugschlitten 24a, 24b, die jeweils mit Hilfe einer Z-Achs-Führungseinrichtung 88 zwischen der Bearbeitungszone 23, in der eine Bearbeitung des Werkstücks 12 mit dem am Werkzeugschlitten 24a, 24b angeordneten Bearbeitungswerkzeug 22 stattfindet, und einer Werkzeugwechselposition (nicht dargestellt) in Z-Achsrichtung 21 linear verfahrbar sind.

Wie insbesondere in Figur 6 gezeigt, besitzt die Z-Achs-Führungseinrichtung 88 einer jeweiligen Bearbeitungseinheit 13, 14 zwei parallel zueinander ausgerichtete Z-Achs-Führungsschienen 89, auf denen der zugeordnete Werkzeugschlitten 24a, 24b linear beweglich zwischen der Bearbeitungszone und der Werkzeugwechselposition bewegbar ist.

Der Werkzeugschlitten 24a, der ersten Bearbeitungseinheit 13 ist demnach um eine Z₁-Achse 90 und der Werkzeugschlitten 24b der zweiten Bearbeitungseinheit um eine Z₂-Achse 91 linear beweglich geführt.

Jeder der beiden Werkzeugschlitten 24a, 24b besitzt eine zu einer Rotationsbewegung antreibbare Antriebsspindel 92 (Fig.5), die die Antriebsenergie für das an Bord des Werkzeugschlittens 24a, 24b befindliche Bearbeitungswerkzeug 22 zur Verfügung stellt.

Die Rotationsbewegung der Antriebsspindel 92 wird durch ein an Bord des jeweiligen Werkzeugschlittens 24a, 24b befindlichen Antriebsmotor 93 erzeugt.

Wie insbesondere in Figur 5 gezeigt, besitzt der jeweilige Werkzeugschlitten 24, 24b vorderseitig also zur Bearbeitungszone 23 hingewandt eine Werkzeug-Schnittstelle 94, die mit einer Gegen-Schnittstelle 95 am Bearbeitungswerkzeug 22 zusammenwirkt, wodurch das Bearbeitungswerkzeug 22 exakt positionsgenau am Werkzeugschlitten 24a, 24b gehaltert und für die anschließende Bearbeitung des Werkstücks 12 in der Bearbeitungszone 23 zur Verfügung steht. Auch hier ist es wichtig zu bemerken, dass die Gegen-Schnittstellen 95 an den Bearbeitungswerkzeugen 22 unabhängig von der Werkzeuggeometrie stets identisch ausgebildet sind und daher immer auf die Werkzeug-Schnittstelle 94 am Werkzeugschlitten 24a, 24b passen.

Wie insbesondere in Figur 5 gezeigt, befindet sich der Antriebsmotor 93 für die Antriebsspindel 92 im Werkzeugschlitten 24a, 24b und die Antriebsspindel 92 durchsetzt den Werkzeugschlitten 24a, 24b in Z-Achs-Richtung 21. Die Rotationsbewegung der Antriebsspindel 92 wird dann über eine Kupplungseinrichtung (nicht dargestellt) in das Bearbeitungswerkzeug 22 eingekuppelt, wo sie dann einer oder mehreren Arbeitsspindeln, die gegebenenfalls mit Bearbeitungswerkzeugen 22 wie Bohrer oder Fräser bestückt sind, zur Verfügung gestellt wird.

Die Linearbewegung der Werkzeugschlitten 24a, 24b wird durch einen Z-Achs-Antrieb 96 erzeugt, der im gezeigten Beispielsfall als Linearantrieb in Form eines Z-Achs-Spindelantriebs ausgebildet ist.

Wie insbesondere in Figur 6 gezeigt, besitzt der Z-Achs-Antrieb 96 in Form des Spindelantriebs einen Antriebsmotor 97, der eine Spindelmutter (nicht dargestellt) rotatorisch antreibt, die von einer Spindelstange 98 durchsetzt ist, und die durch die Rotationsbewegung der Spindelmutter zu einer Linearbewegung in Z-Achs-Richtung 21 angetrieben wird. Die Spindelstange 98 ist, wie insbesondere in Figur 5 gezeigt, an ihrem freien Ende mit einem Grundträger 99 des Werkzeugschlittens 24a, 24b verbunden.

Auch hier ist es wichtig, die Ist-Position des jeweiligen Werkzeugschlittens 24a, 24b zu kennen, d. h. zu ermitteln und zu überwachen. Hierzu wird ein Z-Achs-Messsystem 100 eingesetzt, mit einem parallel zu den Z-Achs-Führungsschienen 89 verlaufenden Maßband bzw. einer derartigen Messschiene 101, das mit einem am Grundträger 99 des Werkzeugschlittens 24a, 24b angeordneten Messkopf 102 zusammenwirkt. Es ist zu erwähnen, dass der Messkopf 102 am vorderen, der Werkzeug-Schnittstelle 94 des Werkzeugschlittens 24a, 24b zugeordneten Ende angeordnet ist, wodurch der Einfluss der in Folge beim Bearbeiten auftretenden Wärmedehnung des Werkzeugschlittens 24a, 24b minimiert werden kann.

Das Bearbeitungszentrum 11 besitzt ferner einen Werkzeugwechsler 103, mit dem, insbesondere synchron, ein Werkzeugwechsel an dem ersten Werkzeugschlitten 24a und im zweiten Werkzeugschlitten 24b durchgeführt werden kann, wenn diese sich in der Werkzeugwechselposition befinden.

Ein wichtiger Aspekt ist, dass der Werkzeugwechsler 103 mittels einer Drehantriebsvorrichtung 104 um eine Wechsler-Drehachse 105 (Fig.4) drehbar zwischen einem Werkzeugmagazin, insbesondere zwei Werkzeugmagazinen 106a, 106b und dem zugeordneten Werkzeugschlitten 24a, 24b zur Übergabe oder Aufnahme von Bearbeitungswerkzeugen 22 gelagert ist.

Wie insbesondere in Figur 1 gezeigt, besitzt der Werkzeugwechsler 103 einen Grundkörper 107, der im gezeigten Beispielsfall quaderförmig oder kubisch ausgestaltet ist. Der Grundkörper 107 besitzt eine Außenfläche, die im Beispielsfall des kubischen Grundkörpers vier 90° zueinanderstehende Flächenabschnitte sind.

Der Werkzeugwechsler 103 besitzt ferner wenigstens zwei, im gezeigten Beispielsfall wenigstens vier und insbesondere acht Wechselarme 109, die jeweils einem der Werkzeugschlitten 24a, 24b zugeordnet sind und jeweils eine Wechsler-Spannvorrichtung 110 aufweisen.

Im gezeigten Beispielsfall sind am Grundkörper 107 des Werkzeugwechslers 103 mehrere Wechselarm-Paare 111a-d ausgebildet wobei jedes Wechselarm-Paar 111a-d einen der Außenflächenabschnitten der Außenfläche 108 des Grundkörpers 107 zugeordnet ist. Die Wechselarme 109 sind jeweils zwischen einer Gebrauchsposition (nicht dargestellt), in der eine Übergabe oder Übernahme eines Bearbeitungswerkzeugs 22 an den bzw. von dem Werkzeugschlitten 24a, 24b oder an das bzw. von dem Werkzeugmagazin 106a, 106b ermöglicht ist, und einer Transitposition 112, in der ein Verdrehen des Werkzeugwechslers 103 um die Wechsler-Drehachse 105 ermöglicht ist entlang der Y-Achs-richtung 20 verfahrbar.

Wie insbesondere in Figur 4 gezeigt, besitzt die Drehantriebsvorrichtung 104 des Werkzeugwechslers 103 einen Antriebsmotor 113, der eine Antriebswelle (nicht dargestellt) rotatorisch antreibt, die über ein Zahnradgetriebe 114 die Rotationsbewegung der Antriebswelle in eine Drehbewegung des Werkzeugwechslers 103 um die Wechsler-Drehachse 105 umsetzt. Die beiden Werkzeugmagazine 106a, 106b befinden sich links und rechts des Werkzeugwechslers 103 wodurch der Wechsler in nachfolgend noch näher beschriebener Weise abwechselnd darauf zugreifen kann.

Die Werkzeugmagazine 106a, 106b sind identisch zueinander aufgebaut. Sie besitzen jeweils ein Magazingestell 115, an dem eine Werkzeugfördervorrichtung 116 angeordnet ist. Die Werkzeugfördervorrichtung 116 weist ein mittels eines Magazinantriebs 117 antreibbares Förderelement auf, das im gezeigten Beispielsfall als Förderkette ausgebildet ist. Das Förderelement 118 ist mittels des Magazinantriebs 117 längs der Z-Achsrichtung antreibbar.

Am Förderelement sind mehrere Werkzeughalterungen 119 zur Halterung von Bearbeitungswerkzeugen 22 angeordnet. Die Werkzeughalterungen 119, die auch als Speicherwägen bezeichnet werden können sind mittels der Förderbewegung des Förderelements 118 in eine Werkzeug-Wechselposition bewegbar, in der ein Wechselarm 109 des Werkzeugwechslers 103 mit dem Werkzeugmagazin 106a, 106b zum Werkzeugwechseln interagiert.

Die Werkzeugfördereinrichtung 116 ist derart ausgebildet, dass das Förderelement, also insbesondere die Förderkette mit den Werkzeughalterungen, über Wälzlager gelagert endlos umläuft. Das Förderelement wird durch zwei Umlenkungen 120a, 120b umgelenkt, die das Förderelement 118 in ein Obertrum 121 und ein Untertrum 122 unterteilen, wobei das Obertrum 121 in Richtung zur Bearbeitungszone hin und das Untertrum 122 von der Bearbeitungszone wegbewegt wird. Zweckmäßigerweise ist eine der Umlenkungen 120a als Antriebsrad ausgebildet, an dem der Magazinantrieb 117 sitzt. Zweckmäßigerweise wird die andere Umlenkung 120b durch eine Bahnkurve gebildet, die an einem insbesondere schwertartigen Führungskörper der Werkzeugfördereinrichtung 116 ausgebildet, insbesondere dort einge-fräst ist.

Bei der Bearbeitung von Werkstücken 12 mittels des erfindungsgemäßen Bearbeitungszentrums 11 laufen folgende Schritte ab:
Roh-Werkstücke werden auf dem Wechselshuttle 78 antransportiert, d. h. die Roh-Werkstücke befinden sich an den zugeordneten Bestückungsplätzen 87a, 87b des Rundschalttischs 85 und sind dort mittels der zugehörigen Werkstückhalter gelagert.

Je nach Bearbeitungsvorgabe können die Werkstücke 12 in einer ersten Aufspannung oder in einer zweiten Aufspannung an den Werkstückhaltern gelagert sein, wobei sich die beiden Aufspannungen durch die Orientierung des Werkstücks 12 unterscheiden, so dass beispielsweise mittels einer ersten Aufspannung Bearbeitungsstellen am Umfang des Werkstücks 12 bearbeitet werden können, während in einer zweiten Aufspannung Bearbeitungsstellen an den Stirnseiten des Werkstücks 12 zur Bearbeitung zur Verfügung stehen.

Das Wechselshuttle 78 mit den vorbereiteten Roh-Werkstücken fährt linear in die Wechselposition in der Bearbeitungszone 23 durch ein vorher geöffnetes Tor in der Einhausung. Dort sind bereits die zugehörigen Werkstückpositioniereinheiten 26a, 26b so orientiert, dass die Roh-Werkstücke übernommen werden können, indem die Halterungen, insbesondere Federspanner, an den Werkzeughaltern gelöst und die Werkstück-Spannelemente 70 an den Spannvorrichtungen aktiviert sind, wodurch das Roh-Werkstück an der zugeordneten Spannvorrichtung 25 festgespannt ist und zur Bearbeitung bereitsteht. Dieser Vorgang lässt sich synchron sowohl mit der Werkstückpositioniereinheit 26a der ersten Bearbeitungseinheit 13 als auch mit der Werkstückpositioniereinheit 26b der zweiten Bearbeitungseinheit 14 durchführen. Es ist nicht notwendig, dass die Roh-Werkstücke an den Bestückungsplätzen des Wechselshuttles 78 identisch sind bzw. gleichartig gelagert sind, d. h. prinzipiell lässt sich an die Werkstückpositioniereinheit 26a der ersten Bearbeitungseinheit 13 ein Roh-Werkstück eines ersten Typs übergeben, während an die zweite Werkstückpositioniereinheit 26b ein Roh-Werkstück eines anderen Typs übergeben wird.

Ferner ist es auch möglich, dass mit der ersten Bearbeitungseinheit 13 ein Roh-Werkstück eines ersten Typs mit einer ersten Aufspannung und mit der zweiten Bearbeitungseinheit 14 ein Roh-Werkstück des gleichen Typs mit einer anderen Aufspannung bearbeitet wird.

Ferner ist es auch möglich, dass an der ersten Bearbeitungseinheit 13 eine Vier-Achsbearbeitung mit einer entsprechenden Vier-Achs-Spannvorrichtung 25 durchgeführt wird, während gleichzeitig an der zweiten Bearbeitungseinheit 14 eine Fünf-Achs-Bearbeitung mit einer entsprechenden Fünf-Achs-Spannvorrichtung durchgeführt wird. Die geeigneten Spannvorrichtungen 25 für die zu bearbeitenden Roh-Werkstücke werden vor der Übergabe der Roh-Werkstücke ebenfalls durch das Wechselshuttle 78 zur Verfügung gestellt.

Gleichzeitig mit der Übergabe der Werkstücke 12 findet ein Werkzeugwechsel auf das für die Bearbeitung der Roh-Werkstücke geeigneten und vorgesehenen Bearbeitungswerkzeugs 22 statt. Hierzu fahren zunächst die beiden den Werkzeugschlitten 24a, 24b zugeordneten Wechselarme 109 also dieses Wechselarm-Paar 111b in die Wechselposition und übernehmen hier von den Werkzeugschlitten 24a, 24b nicht benötigte also auszuwechselnde Bearbeitungswerkzeuge 22, während gleichzeitig 90° versetzt hierzu einem der Werkzeugmagazine 106a, 106b zugeordnetes Wechselarm-Paar 111a einzuwechselnde Bearbeitungswerkzeuge 22 ebenfalls durch Verfahren in die Wechselposition von den Werkzeughalterungen 119 übernimmt. Die Wechselarm-Paare 111a, 111b an den Werkzeugschlitten 24a, 24b und am zugeordneten Werkzeugmagazin 106a, fahren dann gleichzeitig nach oben in die Transitposition 112, wo dann anschließend eine Drehung des Werkzeugwechslers 130 um 90° stattfindet, so dass die einzuwechselnden Werkzeuge 22 zu den zugeordneten Werkzeugschlitten 24a, 24b gelangen und die auszuwechselnden Bearbeitungswerkzeuge 22 an das gegenüberliegende Werkzeugmagazin 106b, also an das Werkzeugmagazin, aus dem die einzuwechselnden Bearbeitungswerkzeuge nicht entnommen wurden, gelangt.

Anschließend werden die Wechselarm-Paare 111a, 111b wiederum in die Wechselpositionen nach unten gefahren, so dass eine Übergabe der einzuwechselnden Bearbeitungswerkzeuge 22 an die Werkzeugschlitten 24a, 24b bzw. der auszuwechselnden Bearbeitungswerkzeuge 22 an unbestückte Werkzeughalterungen 119 des Werkzeugmagazins 106b stattfindet.

Anschließend fahren die Werkzeugschlitten 24a, 24b von ihrer Wechselposition in Z-Achs-Richtung 21 in Richtung Bearbeitungszone 23, so dass die eingewechselten Bearbeitungswerkzeuge 22 in die Bearbeitungszone 23 gelangen, wo dann eine Bearbeitung der zuvor eingewechselten Roh-Werkstücke stattfinden kann. Die Prozesse des Werkzeugwechsels und des Werkstückwechsels laufen gleichzeitig ab, so dass bei abgeschlossenem Werkstückwechsel bereits ein eingewechseltes Bearbeitungswerkzeug zur Verfügung steht. Zur Bearbeitung der Roh-Werkzeuge werden dann die Antriebsspindeln der Werkzeugschlitten 24a, 24b aktiviert, so dass die am Bearbeitungswerkzeug 22 angeordneten Arbeitsspindeln das zugeordnete Roh-Werkstück bearbeiten können. Bei der Bearbeitung des Roh-Werkstücks ist es zudem möglich, dass das Bearbeitungswerkzeug in Z-Achsrichtung 21 verfährt, während das an der zugeordnete Werkstückpositioniereinheit 26a, 26b angeordnete Werkstück bei der Vier-Achsbearbeitung in X-Achsrichtung 19, Y-Achsrichtung 20 und um die erste Rotationsachse 54 und bei einer Fünf-Achsbearbeitung zusätzlich noch um die zweite Rotationsachse 72 bewegt werden kann.

## Patentansprüche

1. Bearbeitungszentrum zur mechanischen Bearbeitung von Werkstücken (12), mit einer ersten Bearbeitungseinheit (13), die einen in einer Z-Achsrichtung (21) eines durch drei senkrecht aufeinander stehende Achsrichtungen X, Y, Z gebildeten Koordinatensystems bewegbaren, mit einem Bearbeitungswerkzeug (22) zur Bearbeitung eines in einer Bearbeitungszone (23) angeordneten Werkstücks (12) bestückbaren ersten Werkzeugschlitten (24a) und eine in einer X-Achsrichtung (19) und in einer Y-Achsrichtung (20) bewegbare, mit einer Spannvorrichtung (25) zur Aufnahme und zum Festspannen des zu bearbeitenden Werkstücks (12) bestückbare erste Werkstückpositioniereinheit (26a) aufweist, wobei der erste Werkzeugschlitten (24a) eine zu einer Rotationsbewegung antreibbare Antriebsspindel (92) zur Bereitstellung von Antriebsenergie für das Bearbeitungswerkzeug (22) aufweist, und wobei die Spannvorrichtung (25) um eine erste Rotationsachse (54) rotierbar ist, mit einer unabhängig von der ersten Bearbeitungseinheit (13) betreibbaren zweiten Bearbeitungseinheit (14), die in X-Achsrichtung (19) benachbart zu der ersten Bearbeitungseinheit (13) angeordnet ist und einen unabhängig von dem ersten Werkzeugschlitten (24a) in Z-Achsrichtung (21) bewegbaren zweiten Werkzeugschlitten (24b) sowie eine unabhängig von der ersten Werkstückpositioniereinheit (26a) in X-Achsrichtung (19) und Y-Achsrichtung (20) bewegbare zweite Werkstückpositioniereinheit (26b) aufweist, mit einem Werkzeugwechsler (103), mit dem ein Werkzeugwechsel an dem ersten Werkzeugschlitten (24a) und dem zweiten Werkzeugschlitten (24b) durchführbar ist, wenn diese sich in der Werkzeugwechselposition befinden, wobei der Werkzeugwechsler (103) mittels einer Drehantriebsvorrichtung (104) um eine Wechsler-Drehachse (105) drehbar zwischen Werkzeugmagazin (106a, b) und Werkzeugschlitten (24a, b) zur Übergabe oder Aufnahme von Bearbeitungswerkzeugen (23) gelagert ist, **dadurch gekennzeichnet, dass** der Werkzeugwechsler (103) einen Grundkörper (107) mit einer Außenfläche (108) aufweist, an der wenigstens zwei Paare von Wechselarmen angeordnet sind, derart, dass die durch die beiden Wechselarme (109) eines Paares von Wechselarmen jeweils aufgespannten Ebenen im Winkel zueinander stehen, wobei vorzugsweise ein Wechselarm-Paar (111a, b) sich an dem zugeordneten Werkzeugmagazin (106a, b) und ein Wechselarm-Paar (111a, b) an den Werkzeugschlitten (24a, b) befindet.

2. Bearbeitungszentrum nach Anspruch 1, **dadurch gekennzeichnet, dass** den Bearbeitungseinheiten (13, 14) für die unabhängig voneinander durchführbare Bewegung in X-Achsrichtung (19) eine gemeinsame Führungseinrichtung (27) zugeordnet ist, wobei vorzugsweise die Führungseinrichtung (27) sich entlang der X-Achsrichtung (19) oberhalb des ersten und zweiten Werkzeugschlittens (24a, 24b) erstreckt und wobei insbesondere die Führungseinrichtung (27) wenigstens eine sich in X-Achs-richtung (19) erstreckende X-Führungsschiene (31a-c) aufweist, auf der die erste und zweite Werkstückpositioniereinheit (26a, 26b) unabhängig voneinander mittels den Werkstückpositioniereinheiten (26a, 26b) jeweils zugordneten X-Achs-Antrieben (36a, 36b) hin- und herbewegbar sind.

3. Bearbeitungszentrum nach Anspruch 2, **dadurch gekennzeichnet, dass** die X-Achs-Antriebe (36a, 36b) als Linearantriebe, insbesondere Linearmotoren ausgebildet sind.

4. Bearbeitungszentrum nach einem der vorhergehenden Ansprüche, **dadurch gekennzeichnet, dass** die Werkstückpositioniereinheiten (26a, 26b) jeweils einen in X-Achsrichtung (19) verfahrbar an der wenigstens einen X-Führungsschiene (31a-c) der Führungseinrichtung (27) gelagerten Kreuzschlitten (32a, b) und einen in Y-Achsrichtung (20) verfahrbar am Kreuzschlitten (32a, b) gelagerten Y-Schlitten (33a, 33b) aufweisen, wobei vorzugsweise der Kreuzschlitten (32a, b) einen Y-Achs-Antrieb (46), insbesondere Y-Spindelantrieb, zum Antreiben des zugeordneten Y-Schlittens (33a, b) in der Y-Achsrichtung (20) aufweist.

5. Bearbeitungszentrum nach Anspruch 4, **dadurch gekennzeichnet, dass** die Werkstückpositioniereinheiten (26a, b) jeweils einen insbesondere an Bord des jeweiligen Y-Schlittens (33a, b) angeordneten Rotationsantrieb (56) zur Einleitung einer Rotationsbewegung auf die angekoppelte Spannvorrichtung (25) um die erste Rotationsachse (54) aufweist, wobei vorzugsweise die erste Rotationsachse (54) in Y-Achsrichtung (20) verläuft.

6. Bearbeitungszentrum nach Anspruch 4 oder 5, **dadurch gekennzeichnet, dass** der Y-Schlitten (33a, b) jeweils einen Grundkörper (45) und einen um die erste Rotationsachse (54) rotierbaren, an dem Grundkörper (45) gelagerten Drehteller (55) aufweisen, wobei vorzugsweise der Drehteller (55) eine Drehteller-Schnittstelle (62) zur Kopplung mit der Spannvorrichtung (25) aufweist.

7. Bearbeitungszentrum nach Anspruch 6, **dadurch gekennzeichnet, dass** die Spannvorrichtung (25) eine mit einer Gegen-Schnittstelle (63) zur Kopplung mit der Drehteller-Schnittstelle (62) ausgebildete Werkstückpalette (64) und eine mit der Werkstückpalette (64) verbundene, mehrere Werkstück-Spannelemente (70) aufweisende Spanneinheit (71) aufweist, wobei die Spannelemente (70) zwischen einer Freigabestellung und einer das zu bearbeitende Werkstück (12) festspannenden Spannstellung bewegbar sind.

8. Bearbeitungszentrum nach einem der vorhergehenden Ansprüche, **gekennzeichnet durch** ein Wechselshuttle (78) zum Wechseln von Werkstücken (12) oder Spannvorrichtungen (25), wobei das Wechselshuttle (78) zwischen einer Bereitschaftsposition (79) und einer in der Bearbeitungszone (23) befindlichen Wechselposition bewegbar, insbesondere linear bewegbar, ist, wobei in der Wechselposition entweder wenigstens ein bearbeitetes Werkstück (12) oder wenigstens eine auszuwechselnde Spannvorrichtung (25) von dem Wechselshuttle (78) übernehmbar ist oder wenigstens ein Roh-Werkstück oder wenigstens eine einzuwechselnde Spannvorrichtung (25) an zumindest eine Werkstückpositioniereinheit (26a, b) übergebbar ist.

9. Bearbeitungszentrum nach Anspruch 8, **dadurch gekennzeichnet, dass** das Wechselshuttle (78) mehrere Bestückungsplätze (87a-d) zur Aufnahme von Werkstückträgern oder Vorrichtungsträgern aufweist, wobei die Werkstückträger leer oder mit Werkstücken (12) bestückt sind, und wobei die Vorrichtungsträger leer oder mit Spannvorrichtungen (25) bestückt sind.

10. Bearbeitungszentrum nach Anspruch 8 oder 9, **dadurch gekennzeichnet, dass** das Wechselshuttle (78) einen Rundschalttisch (85) aufweist, der insbesondere um eine in Y-Achsrichtung (20) verlaufende Shuttle-Drehachse (86), drehbar ist, wobei das Wechselshuttle zumindest vier Bestückungsplätze (87a-d) aufweist, von denen sich in der Wechselposition zwei derart in der Bearbeitungszone (23) befinden, dass eine Übergabe oder Übernahme ermöglicht wird, und anschließend durch Drehen des Rundschalttisches (85) die zwei anderen Bestückungsplätze (87a-d) in die Bearbeitungszone (23) einschwenkbar sind.

11. Bearbeitungszentrum nach einem der Ansprüche 8 bis 10, **dadurch gekennzeichnet, dass** das Wechselshuttle (78) linear in Z-Achsrichtung (21) bewegbar ist, wobei die Werkstückpositioniereinheiten (26a, b) zwischen den Werkzeugschlitten (24a, b) und dem Wechselshuttle (78) angeordnet sind.

12. Bearbeitungszentrum nach einem der vorhergehenden Ansprüche, **dadurch gekennzeichnet, dass** ein mit dem zugeordneten Werkzeugschlitten (24a, b) gekoppeltes Bearbeitungswerkzeug (22) mittels einer Z-Achs-Führungseinrichtung (88) zwischen der Bearbeitungszone (23) und einer Werkzeugwechselposition bewegbar ist, wobei vorzugsweise die Z-Achs-Führungseinrichtung (88) wenigstens eine in Z-Achsrichtung (21) verlaufende Z-Führungsschiene (89) aufweist, mittels der der zugeordneter Werkzeugschlitten (24a, 24b) mittels eines Z-Achs-Antriebs (96) in Z-Achsrichtung (21) bewegbar ist.

13. Bearbeitungszentrum nach einem der vorhergehenden Ansprüche, **dadurch gekennzeichnet, dass** der Werkzeugwechsler (103) wenigstens zwei Wechselarme (109) aufweist, die jeweils einem der Werkzeugschlitten (24a, b) zugeordnet sind und jeweils eine Wechsler-Spannvorrichtung (110) aufweisen, wobei vorzugsweise die Wechselarme (109) jeweils zwischen einer Gebrauchsposition, in der eine Übergabe oder Übernahme eines Bearbeitungswerkzeuges (22) an den bzw. von dem Werkzeugschlitten (24a, b) oder an das bzw. von dem Werkzeugmagazin (106a, b) ermöglicht ist, und einer Transitposition (112), in der ein Verdrehen des Werkzeugwechslers (103) um die Wechsler-Drehachse (105) ermöglicht ist, verfahrbar sind, insbesondere entlang der Y-Achsrichtung (20).

## Claims

1. Machining centre for the mechanical machining of workpieces (12), comprising a first machining unit (13) which has a first tool slide (24a) movable in a Z-axis direction (21) of a coordinate system formed by three mutually perpendicular axis directions X, Y, Z and equippable with a machining tool (22) for machining a workpiece (12) arranged in a machining zone (23), and a first workpiece positioning unit (26a) movable in an X-axis direction (19) and in a Y-axis direction (20) and equippable with a clamping device (25) for receiving and clamping the workpiece (12) to be machined, wherein the first tool slide (24a) has a drive spindle (92) drivable in a rotary movement for providing drive energy for the machining tool (22), and wherein the clamping device (25) is rotatable about a first axis of rotation (54), comprising a second machining unit (14) operable independently of the first machining unit (13), which second machining unit is arranged adjacent to the first machining unit (13) in the X-axis direction (19) and has a second tool slide (24b) movable in the Z-axis direction (21) independently of the first tool slide (24a) as well as a second workpiece positioning unit (26b) movable in the X-axis direction (19) and Y-axis direction (20) independently of the first workpiece positioning unit (26a), comprising a tool changer (103) with which a tool change can be carried out on the first tool slide (24a) and the second tool slide (24b) when these are located in the tool exchange position, wherein the tool changer (103) is mounted rotatably about a changer axis of rotation (105) by means of a rotary drive device (104) between tool magazine (106a, b) and tool slides (24a, b) for transferring or receiving machining tools (23), **characterized in that** the tool changer (103) has a base body (107) with an outer surface (108) on which at least two pairs of exchange arms are arranged, such that the planes respectively spanned by the two exchange arms (109) of a pair of exchange arms are at an angle, in particular perpendicular, to one another, wherein preferably one pair of exchange arms (111a, b) is located at the assigned tool magazine (106a, b) and one pair of exchange arms (111a, b) is located at the tool slides (24a, b).

2. Machining centre according to claim 1, **characterized in that** a common guide device (27) is assigned to the machining units (13, 14) for the movement in the X-axis direction (19) which can be carried out independently of one another, wherein preferably the guide device (27) extends along the X-axis direction (19) above the first and second tool slides (24a, 24b), and wherein in particular the guide device (27) has at least one X-guide rail (31a-c) extending in the X-axis direction (19), on which the first and second workpiece positioning units (26a, 26b) are movable back and forth independently of one another by means of X-axis drives (36a, 36b) respectively assigned to the workpiece positioning units (26a, 26b).

3. Machining centre according to claim 2, **characterized in that** the X-axis drives (36a, 36b) are configured as linear drives, in particular linear motors.

4. Machining centre according to any one of the preceding claims, **characterized in that** the workpiece positioning units (26a, 26b) each have a cross slide (32a, b) mounted displaceably in the X-axis direction (19) on the at least one X-guide rail (31a-c) of the guide device (27) and a Y-slide (33a, 33b) mounted displaceably in the Y-axis direction (20) on the cross slide (32a, b), wherein preferably the cross slide (32a, b) has a Y-axis drive (46), in particular a Y-spindle drive, for driving the assigned Y-slide (33a, b) in the Y-axis direction (20).

5. Machining centre according to claim 4, **characterized in that** the workpiece positioning units (26a, b) each have a rotary drive (56), arranged in particular on board the respective Y-slide (33a, b), for introducing a rotary movement to the coupled clamping device (25) about the first axis of rotation (54), wherein preferably the first axis of rotation (54) runs in the Y-axis direction (20).

6. Machining centre according to claim 4 or 5, **characterized in that** the Y-slides (33a, b) each have a base body (45) and a rotary table (55) mounted on the base body (45) and rotatable about the first axis of rotation (54), wherein preferably the rotary table (55) has a rotary table interface (62) for coupling to the clamping device (25).

7. Machining centre according to claim 6, **characterized in that** the clamping device (25) has a workpiece pallet (64) formed with a mating interface (63) for coupling to the rotary table interface (62) and a clamping unit (71) connected to the workpiece pallet (64) and having a plurality of workpiece clamping elements (70), wherein the clamping elements (70) are movable between a release position and a clamping position clamping the workpiece (12) to be machined.

8. Machining centre according to any one of the preceding claims, **characterized by** an exchange shuttle (78) for exchanging workpieces (12) or clamping devices (25), wherein the exchange shuttle (78) is movable, in particular linearly movable, between a standby position (79) and an exchange position located in the machining zone (23), wherein in the exchange position either at least one machined workpiece (12) or at least one clamping device (25) to be exchanged is receivable by the exchange shuttle (78) or at least one raw workpiece or at least one clamping device (25) to be exchanged in is transferable to at least one workpiece positioning unit (26a, b).

9. Machining centre according to claim 8, **characterized in that** the exchange shuttle (78) has a plurality of mounting locations (87a-d) for receiving workpiece carriers or fixture carriers, wherein the workpiece carriers are empty or equipped with workpieces (12), and wherein the fixture carriers are empty or equipped with clamping devices (25).

10. Machining centre according to claim 8 or 9, **characterized in that** the exchange shuttle (78) has a rotary indexing table (85) which is rotatable in particular about a shuttle axis of rotation (86) running in the Y-axis direction (20), wherein the exchange shuttle has at least four mounting locations (87a-d), two of which, in the exchange position, are located in the machining zone (23) in such a way that a transfer or take-over is enabled, and subsequently, by rotating the rotary indexing table (85), the two other mounting locations (87a-d) can be pivoted into the machining zone (23).

11. Machining centre according to any one of claims 8 to 10, **characterized in that** the exchange shuttle (78) is linearly movable in the Z-axis direction (21), wherein the workpiece positioning units (26a, b) are arranged between the tool slides (24a, b) and the exchange shuttle (78).

12. Machining centre according to any one of the preceding claims, **characterized in that** a machining tool (22) coupled to the assigned tool slide (24a, b) is movable between the machining zone (23) and a tool exchange position by means of a Z-axis guide device (88), wherein preferably the Z-axis guide device (88) has at least one Z-guide rail (89) running in the Z-axis direction (21), by means of which the assigned tool slide (24a, 24b) is movable in the Z-axis direction (21) by means of a Z-axis drive (96).

13. Machining centre according to any one of the preceding claims, **characterized in that** the tool changer (103) has at least two exchange arms (109) which are each assigned to one of the tool slides (24a, b) and each have a changer clamping device (110), wherein preferably the exchange arms (109) are each displaceable, in particular along the Y-axis direction (20), between a position of use, in which a transfer or take-over of a machining tool (22) to or from the tool slide (24a, b) or to or from the tool magazine (106a, b) is enabled, and a transit position (112), in which a rotation of the tool changer (103) about the changer axis of rotation (105) is enabled.

## Revendications

1. Centre d'usinage pour l'usinage mécanique de pièces (12), avec une première unité d'usinage (13), qui présente un premier chariot à outils (24a) pouvant être déplacé dans une direction d'axe Z (21) d'un système de coordonnées formé par trois directions d'axe X, Y, Z perpendiculaires les unes par rapport aux autres, pouvant être équipé d'un outil d'usinage (22) pour l'usinage d'une pièce (12) disposée dans une zone d'usinage (23) et une première unité de positionnement de pièce (26a) pouvant être déplacée dans une direction d'axe X (19) et dans une direction d'axe Y (20) et pouvant être équipée d'un dispositif de serrage (25) pour recevoir et fixer par serrage la pièce (12) à usiner, dans lequel le premier chariot à outils (24a) présente une broche d'entraînement (92) pouvant être entraînée dans un déplacement de rotation pour fournir de l'énergie d'entraînement pour l'outil d'usinage (22), et dans lequel le dispositif de serrage (25) peut être tourné autour d'un premier axe de rotation (54), avec une deuxième unité d'usinage (14) pouvant fonctionner indépendamment de la première unité d'usinage (13), qui est disposée dans la direction d'axe X (19) de manière adjacente à la première unité d'usinage (13) et qui présente un deuxième chariot à outils (24b) pouvant être déplacé dans la direction d'axe Z (21) indépendamment du premier chariot à outils (24a) ainsi qu'une deuxième unité de positionnement de pièce (26b) pouvant être déplacée indépendamment de la première unité de positionnement de pièce (26a) dans la direction d'axe X (19) et dans la direction d'axe Y (20), avec un changeur d'outil (103), qui permet d'effectuer un changement d'outil sur le premier chariot à outils (24a) et le deuxième chariot à outils (24b) lorsque ceux-ci se trouvent dans la position de changement d'outil, dans lequel le changeur d'outil (103) est monté de manière à pouvoir tourner autour d'un axe de rotation de changeur (105) entre le magasin d'outils (106a, b) et le chariot à outils (24a, b) pour le transfert ou la réception d'outils d'usinage (23) au moyen d'un dispositif d'entraînement en rotation (104), **caractérisé en ce que** le changeur d'outil (103) présente un corps de base (107) avec une surface extérieure (108), sur laquelle sont disposées au moins deux paires de bras de changement de telle manière que les plans respectivement formés par les deux bras de changement (109) d'une paire de bras de changement se situent à un angle les uns par rapport aux autres, dans lequel, de préférence, une paire de bras de changement (111a, b) se trouve sur le magasin d'outils (106a, b) associé et une paire de bras de changement (111a, b) se trouve sur les chariots à outils (24a, b).

2. Centre d'usinage selon la revendication 1, **caractérisé en ce qu'**un dispositif de guidage (27) commun est associé aux unités d'usinage (13, 14) pour le déplacement pouvant être réalisé indépendamment l'une de l'autre dans la direction d'axe X (19), dans lequel de préférence le dispositif de guidage (27) s'étend le long de la direction d'axe X (19) au-dessus du premier et du deuxième chariot à outils (24a, 24b) et dans lequel en particulier le dispositif de guidage (27) présente au moins un rail de guidage X (31a-c) s'étendant dans la direction d'axe X (19), sur lequel la première et la deuxième unité de positionnement de pièce (26a, 26b) peuvent être déplacées en va-et-vient indépendamment l'une de l'autre au moyen d'entraînements d'axe X (36a, 36b) associés chacun aux unités de positionnement de pièce (26a, 26b).

3. Centre d'usinage selon la revendication 2, **caractérisé en ce que** les entraînements d'axe X (36a, 36b) sont réalisés comme des entraînements linéaires, en particulier des moteurs linéaires.

4. Centre d'usinage selon l'une quelconque des revendications précédentes, **caractérisé en ce que** les unités de positionnement de pièce (26a, 26b) présentent respectivement un chariot en croix (32a, b) monté sur l'au moins un rail de guidage X (31a-c) du dispositif de guidage (27) de manière déplaçable dans la direction d'axe X (19) et un chariot Y (33a, 33b) monté sur le chariot en croix (32a, b) de manière déplaçable dans la direction d'axe Y (20), dans lequel de préférence le chariot en croix (32a, b) présente un entraînement d'axe Y (46), en particulier un entraînement de broche Y, pour entraîner le chariot Y (33a, b) associé dans la direction d'axe Y (20).

5. Centre d'usinage selon la revendication 4, **caractérisé en ce que** les unités de positionnement de pièce (26a, b) présentent respectivement un entraînement en rotation (56) disposé en particulier à bord du chariot Y (33a, b) respectif pour l'application d'un déplacement de rotation sur le dispositif de serrage (25) couplé autour du premier axe de rotation (54), dans lequel le premier axe de rotation (54) s'étend de préférence dans la direction d'axe Y (20).

6. Centre d'usinage selon la revendication 4 ou 5, **caractérisé en ce que** le chariot en Y (33a, b) présente respectivement un corps de base (45) et un plateau tournant (55) pouvant tourner autour du premier axe de rotation (54), monté sur le corps de base (45), dans lequel de préférence le plateau tournant (55) présente une interface de plateau tournant (62) pour le couplage au dispositif de serrage (25).

7. Centre d'usinage selon la revendication 6, **caractérisé en ce que** le dispositif de serrage (25) présente une palette de pièces (64) réalisée avec une contre-interface (63) pour le couplage à l'interface de plateau tournant (62) et une unité de serrage (71) présentant plusieurs éléments de serrage de pièce (70), reliée à la palette de pièces (64), dans lequel les éléments de serrage (70) peuvent être déplacés entre une position de desserrage et une position de serrage fixant par blocage la pièce (12) à usiner.

8. Centre d'usinage selon l'une quelconque des revendications précédentes, **caractérisé par** une navette de changement (78) pour le changement de pièces (12) ou de dispositifs de serrage (25), dans lequel la navette de changement (78) peut être déplacée, en particulier peut être déplacée linéairement, entre une position de disponibilité (79) et une position de changement se trouvant dans la zone d'usinage (23), dans lequel dans la position de changement soit au moins une pièce (12) usinée, soit au moins un dispositif de serrage (25) à changer peut être prise ou pris en charge par la navette de changement (78) ou au moins une pièce brute ou au moins un dispositif de serrage (25) à remplacer peut être transmise ou transmis à au moins une unité de positionnement de pièce (26a, b).

9. Centre d'usinage selon la revendication 8, **caractérisé en ce que** la navette de changement (78) présente plusieurs emplacements d'équipement (87a-d) pour recevoir des porte-pièces ou des porte-dispositifs, dans lequel les porte-pièces sont vides ou équipés de pièces (12), et dans lequel les porte-dispositifs sont vides ou équipés de dispositifs de serrage (25).

10. Centre d'usinage selon la revendication 8 ou 9, **caractérisé en ce que** la navette de changement (78) présente une table d'indexation rotative (85), qui peut tourner en particulier autour d'un axe de rotation (86) de navette s'étendant dans la direction d'axe Y (20), dans lequel la navette de changement présente au moins quatre emplacements d'équipement (87a-d), dont deux se trouvent dans la position de changement dans la zone d'usinage (23) de manière à permettre un transfert ou une prise en charge, puis les deux autres emplacements d'équipement (87a-d) peuvent être rentrés par pivotement dans la zone d'usinage (23) en tournant la table d'indexation rotative (85).

11. Centre d'usinage selon l'une quelconque des revendications 8 à 10, **caractérisé en ce que** la navette de changement (78) peut être déplacée linéairement dans la direction d'axe Z (21), dans lequel les unités de positionnement de pièce (26a, b) sont disposées entre les chariots à outils (24a, b) et la navette de changement (78).

12. Centre d'usinage selon l'une quelconque des revendications précédentes, **caractérisé en ce qu'**un outil d'usinage (22) couplé au chariot à outils (24a, b) associé peut être déplacé au moyen d'un dispositif de guidage d'axe Z (88) entre la zone d'usinage (23) et une position de changement d'outil, dans lequel le dispositif de guidage d'axe Z (88) présente de préférence au moins un rail de guidage Z (89) s'étendant dans la direction d'axe Z (21), au moyen duquel le chariot à outils (24a, 24b) associé peut être déplacé dans la direction d'axe Z (21) au moyen d'un entraînement d'axe Z (96).

13. Centre d'usinage selon l'une quelconque des revendications précédentes, **caractérisé en ce que** le changeur d'outil (103) présente au moins deux bras de changement (109), qui sont associés chacun à un des chariots à outils (24a, b) et présentent chacun un dispositif de serrage de changeur (110), dans lequel de préférence les bras de changement (109) peuvent être déplacés chacun entre une position d'utilisation, dans laquelle un transfert ou une prise en charge d'un outil d'usinage (22) sur le ou par le chariot à outils (24a, b) ou sur le ou par le magasin d'outils (106a, b) est possible, et une position de transit (112), dans laquelle une rotation du changeur d'outil (103) autour de l'axe de rotation de changeur (105) est possible, en particulier le long de la direction d'axe Y (20).
